# EUROPEAN PATENT APPLICATION

(11) **EP 4 808 111 A1**
(43) Date of publication of application: **16.09.2026**
(21) Application number: 26160303.9
(22) Date of filing: 24.02.2026
(51) Int. Cl.: H04N 7/14, H04N 7/15, H04N 7/18, H04N 21/218

(54) **COMMUNICATION TERMINAL, COMMUNICATION SYSTEM, COMMUNICATION METHOD, AND CARRIER MEANS**

(30) Priority: 14.03.2025 JP 2025041356
(71) Applicant: Ricoh Company, Ltd., Tokyo 143-8555 (JP)
(72) Inventor: Hinohara, Hiroshi, Tokyo, 143-8555 (JP)
(74) Representative: Marks & Clerk LLP

(57) **Abstract**

A first communication terminal (30) for communicating with a second communication terminal (40), includes: a communication unit (31) configured to receive from the second communication terminal (40) point-of-view information for specifying a predetermined area being displayed in a wide-view image on the second communication terminal (40), the wide-view image being captured by an image capturing apparatus; a display control unit (33) configured to cause a point of view of the second communication terminal (40) to be displayed superimposed in a predetermined area being displayed in the wide-view image on the first communication terminal (30), based on the received point-of-view information; and a limitation unit (37) configured to limit a number of points of view to be superimposed, based on a connection policy including a setting related to the point-of-view information.

## Description

### BACKGROUND

### Technical Field

The present disclosure relates to a communication terminal, a communication system, a communication method, and carrier means.

### Related Art

The communication system transmits at least images and audio from one site to one or more other sites in real time to allow users at remote sites to perform remote communication using the images and audio. Japanese Patent No. 7326789 discloses a technique for displaying a point of gaze in a spherical panoramic image being displayed. The point of gaze is derived based on the position of a virtual camera corresponding to the position of the point of view of a user.

When a large number of users participate in remote communication, a large amount of point-of-view information is also generated. However, the disclosed technique does not consider control of transmission and reception or display of such a large amount of point-of-view information.

### SUMMARY

The present disclosure described herein provides a first communication terminal for communicating with a second communication terminal. The first communication terminal includes a communication unit, a display control unit, and a limitation unit. The communication unit receives from the second communication terminal point-of-view information for specifying a predetermined area being displayed in a wide-view image on the second communication terminal. The wide-view image is captured by an image capturing apparatus. The display control unit causes a point of view of the second communication terminal to be displayed, the point of view being superimposed in a predetermined area displayed in the wide-view image on the first communication terminal, based on the received point-of-view information. The limitation unit limits a number of points of view to be superimposed, based on a connection policy including a setting related to the point-of-view information.

The present disclosure described herein provides a second communication terminal for communicating with a first communication terminal. The second communication terminal includes a display control unit, a communication unit, and a limitation unit. The display control unit causes a display to display a wide-view image captured by an image capturing apparatus. The communication unit transmits to the first communication terminal point-of-view information for specifying a predetermined area in the wide-view image. The limitation unit limits transmission of the point-of-view information to the first communication terminal, based on a connection policy including a setting related to the point-of-view information.

The present disclosure described herein provides a communication system including the above-described first communication terminal, the above-described second communication terminal, and an information processing system. The second communication terminal is one of a plurality of second communication terminals. The information processing system transmits the wide-view image captured by the image capturing apparatus to the first communication terminal and the plurality of second communication terminals.

The present disclosure described herein provides a communication method executed by a first communication terminal for communicating with a second communication terminal. The communication method includes receiving from the second communication terminal point-of-view information for specifying a predetermined area being displayed in a wide-view image on the second communication terminal, the wide-view image being captured by an image capturing apparatus; causing a point of view of the second communication terminal to be displayed, the point of view being superimposed in a predetermined area displayed in the wide-view image on the first communication terminal, based on the received point-of-view information; and limiting a number of points of view to be superimposed, based on a connection policy including a setting related to the point-of-view information.

The present disclosure described herein provides carrier means carrying computer readable code for controlling a computer system to carry out the above-described method.

The present disclosure described herein provides a communication method executed by a second communication terminal for communicating with a first communication terminal. The communication method includes causing a display to display a wide-view image captured by an image capturing apparatus; transmitting to the first communication terminal point-of-view information for specifying a predetermined area in the wide-view image; and limiting transmission of the point-of-view information to the first communication terminal, based on a connection policy including a setting related to the point-of-view information.

The present disclosure described herein provides carrier means carrying computer readable code for controlling a computer system to carry out the above-described method.

According to one aspect of the present disclosure, transmission and reception or display of point-of- view information can be controlled.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of remote communication using a wide-view image;
FIG. 2 is a schematic diagram illustrating an example configuration of a communication system;
FIG. 3 is a diagram illustrating an example hardware configuration of an image capturing apparatus;
FIG. 4 is a diagram illustrating an example hardware configuration of a communication terminal and an information processing system;
FIGs. 5A, 5B, and 5C are example external views of the image capturing apparatus;
FIG. 6 is an illustration of an example of how the image capturing apparatus is used;
FIGs. 7A, 7B, and 7C are diagrams illustrating an example of a process for generating a spherical image from images captured by the image capturing apparatus;
FIGs. 8A and 8B are diagrams illustrating an example of a process for generating a spherical image from images captured by the image capturing apparatus;
FIG. 9 is a diagram illustrating an example of the positions of a virtual camera and a predetermined area in a case where the spherical image is of a three-dimensional sphere;
FIG. 10A is a perspective view of the virtual camera and the predetermined area illustrated in FIG. 9;
FIG. 10B is a diagram illustrating an example of a predetermined-area image displayed on a display;
FIG. 11 is a diagram illustrating an example of the relationship between predetermined-area information and an image of the predetermined area;
FIG. 12 is a diagram illustrating an example of the relationship illustrated in FIG. 11 using a point in a three-dimensional Euclidean space defined in spherical coordinates;
FIG. 13 is a block diagram illustrating an example functional configuration of the communication system;
FIG. 14 is a diagram illustrating an example of image type management information;
FIG. 15 is a diagram illustrating an example of image capturing apparatus management information;
FIG. 16 is a diagram illustrating an example of predetermined-area management information;
FIGs. 17A and 17B are diagrams illustrating examples of image management information;
FIG. 18 is a diagram illustrating an example of virtual room information;
FIGs. 19A and 19B are diagrams illustrating an example of a process for a user to enter a virtual room using the communication system;
FIG. 20 is a diagram illustrating an example of a process performed in the communication system when a user enters a virtual room;
FIG. 21 is a diagram illustrating an example of a virtual room association screen for associating an image capturing apparatus with a virtual room;
FIG. 22 is a diagram illustrating an example of a virtual room association screen;
FIG. 23 is a diagram illustrating an example of a virtual room association screen;
FIGs. 24A and 24B are diagrams illustrating examples of a wide-view image transmission start/stop dialog displayed on the communication terminal;
FIG. 25 is a sequence diagram illustrating an example of a procedure performed in the communication system when a user registers the image capturing apparatus in a virtual room;
FIG. 26 is a sequence diagram illustrating an example of a process for sharing a wide-view image;
FIG. 27 is a flowchart illustrating a communication method according to a comparative example;
FIG. 28 is a flowchart illustrating an example of a processing flow executed by the communication system;
FIG. 29 is a flowchart illustrating a processing flow executed by the communication system in Modification 1;
FIG. 30 is a flowchart illustrating a processing flow executed by the communication system in Modification 2;
FIG. 31 is a flowchart illustrating a processing flow executed by the communication system in Modification 3;
FIGs. 32A, 32B, 32C, 32D, and 32E are diagrams illustrating an example of points of view displayed superimposed on a wide-view image in Modification 3;
FIG. 33 is a diagram illustrating an example of remote communication using the communication system in telemedicine; and
FIG. 34 is a diagram illustrating an example of a virtual room association screen for associating an image capturing apparatus with a virtual room in the example illustrated in FIG. 33.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### Example of Remote Communication

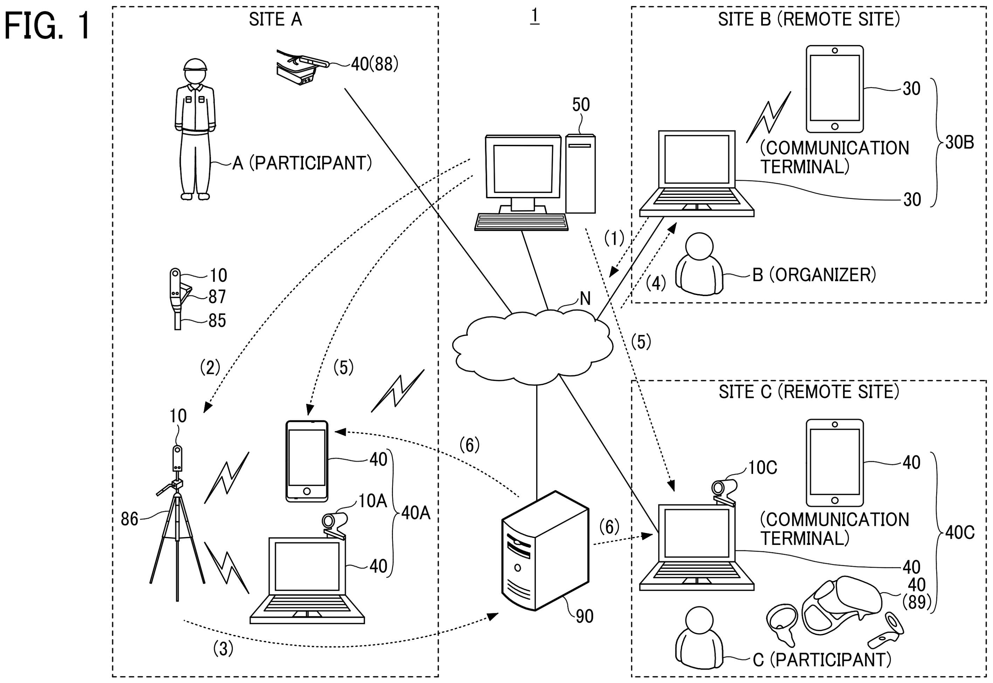

FIG. 1 is a diagram illustrating an example of remote communication using a wide-view image. In FIG. 1, communication takes place across three sites, namely, a site A, a site B, and a site C, via an information processing system 50. Three sites are merely an example, and communication may be performed across two sites or four or more sites.

In one example, the site A is a construction site. The sites B and C are any sites across which a wide-view image can be communicated. In one example, the sites B and C are offices. An image capturing apparatus 10 is placed at the site A. In one example, the image capturing apparatus 10 captures a wide-angle image called a spherical image and an image with a wide angle of view ranging from, for example, 180 degrees to 360 degrees in the horizontal direction. Such an image with a wide angle of view is hereinafter simply referred to as a "wide-view image".

At the site B, various communication terminals 30B for viewing a wide-view image are placed. The communication terminals 30B are used by a user serving as an organizer for remote communication. Hereinafter, the communication terminals 30B are each referred to also as a "first communication terminal 30", or collectively as "first communication terminals 30".

At the site A, various communication terminals 40A for viewing a wide-view image are placed. At the site C, various communication terminals 40C for viewing a wide-view image are placed. The communication terminals 40A placed at the site A and the communication terminals 40C placed at the site C are used by users serving as participants for remote communication. Hereinafter, the communication terminals 40A and 40C are each referred to also as a "second communication terminal 40", or collectively as "second communication terminals 40". The user at the site A, who captures a wide-view image using the image capturing apparatus 10, is also referred to as an imaging operator.

In the construction site, workers are involved in various constructions at various places. The users at the sites A to C monitor any construction and/or work of interest by changing a point of view as appropriate for a wide-view image that is a captured image of the entire construction site. The term "point of view" refers to the center position or range of the entire wide-view image. The center position or range of the entire wide-view image is to be displayed on displays or other means of the communication terminals 30B, 40A, and 40C.

In one example, the image capturing apparatus 10 is attached to a tripod 86. In another example, the image capturing apparatus 10 is attached to an arm 85 through a gimbal 87. A relay device is installed at the construction site. The communication terminal 40A receives a wide-view image from the image capturing apparatus 10 by wire or wirelessly, and transmits the wide-view image to the information processing system 50.

In a communication system 1 illustrated in FIG. 1, a user B at the site B is the organizer and transmits a point-of-view information transmission instruction from the first communication terminal 30 (i.e., any of the communication terminals 30B) to the second communication terminals 40 (i.e., the communication terminals 40A and 40C) used by users A and C at the sites A and C, who are participants. The first communication terminal 30 superimposes a point of view on a wide-view image, based on point-of-view information received from the second communication terminals 40.

In the illustrated example, the communication terminal 40A may also serve as a relay device. The communication terminal 40A may also serve as a terminal for viewing a wide-view image. An image capturing apparatus 10A connected to or incorporated in the communication terminal 40A captures an image, and the captured image may also be transmitted to the information processing system 50.

The user A, who is an imaging operator, may wear smart glasses 88. An image having a normal angle of view may be captured with the smart glasses 88 and may be transmitted to the information processing system 50. The smart glasses 88 are an information terminal having a display on which information acquired via the Internet is displayed with a field of view maintained. The smart glasses 88 are placed at any site. The smart glasses 88 may capture a spherical image.

As examples of the communication terminal 30B, a personal computer (PC) and a smartphone are placed at the site B. The communication terminal 30B is any device for communicating with the information processing system 50 via a network N. Other examples of the communication terminal 30B include display devices such as a tablet terminal, a personal digital assistant (PDA), an electronic whiteboard, and a projector. A camera may be incorporated in or connected to the communication terminal 30B.

As examples of the communication terminal 40C, a PC, a smartphone, and virtual reality (VR) goggles 89 are placed at the site C. In the illustrated example, an image capturing apparatus 10C is incorporated in or connected to the communication terminal 40C. The VR goggles 89 are an information terminal for displaying a computer-based artificial world or a spherical image in accordance with the direction of movement of the neck or the body of the user wearing the VR goggles 89. The image capturing apparatus 10C may be used for a wide-view image or an image having a normal angle of view.

The communication terminal 40C is any device for communicating with the information processing system 50 via the network N. Other examples of the communication terminal 40C include display devices such as a tablet terminal, a PDA, an electronic whiteboard, and a projector. The VR goggles 89 may be placed at any site. In the following description, the image capturing apparatuses 10, 10A, and 10C are each referred to simply as an "image capturing apparatus 10" or collectively as "image capturing apparatuses 10", unless distinguished from one another.

In one example, the image capturing apparatus 10 and the communication terminals 30B, 40A, and 40C are managed using a communication group referred to as a virtual room. The image capturing apparatus 10 is associated with the virtual room. The communication terminals 30B, 40A, and 40C enter the virtual room, thereby receiving a wide-view image transmitted from the image capturing apparatus 10 and allowing the users B, A, and C to view the wide-view image. The smart glasses 88 and the VR goggles 89 may also be associated with the virtual room. The image capturing apparatuses 10A and 10C enter the virtual room integrally with the communication terminals 40A and 40C, respectively.

In FIG. 1, the image capturing apparatus 10 is placed at a construction site, by way of example, but not limitation. The communication system 1 is also applicable to VR education, event distribution, remote customer services, telemedicine services, and other situations. In VR education, the image capturing apparatus 10 is placed at a site such as a study room or a laboratory. Students can view a blackboard, an instrument, a sample, an experimental result, or the like from remote sites while changing the points of view as appropriate.

In event distribution, the image capturing apparatus 10 is placed in a venue of an event to be held on-site. Event participants such as an audience can view the details in the venue online from remote sites while changing the points of view as appropriate. The details in the venue include images of event performers, event participants, and event presenters, images of objects involved in the event, such as products and exhibits, images of materials involved in the event, and images of the venue. The event may be held indoors or outdoors, and examples of the venue of the event include venues such as sports stadiums, concert halls, and theaters.

In remote customer services, for example, in customer services for a travel agency, the image capturing apparatus 10 is placed at each of travel destination sites. A customer can plan their itinerary from a remote site while changing the point of view as appropriate. In telemedicine services, in one example, the image capturing apparatus 10 is placed in a medical setting such as an operating room. Medical people such as doctors, medical students, and persons related to medical instruments can view the performance of a doctor(s) and a nurse(s) during on-site medical treatment, the arrangement of medical instruments, the state of a patient, vitals, and the like from remote sites while changing the points of view as appropriate.

Images may be captured at any sites other than those described above. An image may be captured in any space that a user at a viewing site desires to remotely grasp. Examples of such a space include a school, a factory, a warehouse, a building site, a server room, and a store.

### Sharing of Point of View

The users A to C at the sites A to C can each change the point of view for the wide-view image, as desired. Thus, the users A to C may view different points of the wide-view image in real time. It may be difficult for the users A to C to mutually understand each other. The following describes an overview of sharing of a point of view, assuming that the point of view of the user B at the site B is shared by the users A and C at the sites A and C.
(1) The communication terminals 30B, 40A, and 40C share a wide-view image captured by the image capturing apparatus 10. In response to the user B making a request to capture a wide-view image while viewing the wide-view image from any point of view on the communication terminal 30B, the communication terminal 30B, which is an example of a first communication terminal, transmits point-of-view information and the request to the information processing system 50.
(2) In response to the request, the information processing system 50 designates point-of-view information and transmits an image capturing request to the image capturing apparatus 10 to capture an image. The image to be captured may be either a still image or a moving image.
(3) The image capturing apparatus 10 captures a wide-view image in response to the image capturing request, and stores the wide-view image and the point-of-view information in a location specified by a uniform resource locator (URL) transmitted from the information processing system 50. The URL is an example of storage destination information, and the storage location of the captured image is storage 90. The wide-view image stored in the storage 90 is downloadable and displayable on any communication terminals 30B, 40A, and 40C.
(4) The information processing system 50 transmits the URL to the communication terminal 30B.
(5) The information processing system 50 further transmits the URL to the communication terminals 40A and 40C, which are in the same virtual room as that associated with the image capturing apparatus 10 and the communication terminal 30B, automatically or in response to a request from the user B. The communication terminals 40A and 40C are examples of second communication terminals.
(6) The communication terminals 40A and 40C connect to the URL and receive the point-of-view information and the wide-view image. Each of the communication terminals 40A and 40C sets and displays a point of view identified by the point-of-view information for the wide-view image such that the point of view matches the center of an image area. In one example, the point of view is not made to completely match the center of the image area. In another example, the point of view may be set and displayed so as to be included in a range near the center of the image area.

The same applies when the point of view of the user A at the site A is shared by the users B and C at the sites B and C and when the point of view of the user C at the site C is shared by the users A and B at the sites A and B.

As described above, in the communication system 1, in one example, even in a case where a wide-view image is distributed, point-of-view information is shared across the respective sites. This facilitates understanding among users at the respective sites.

In (3), the image capturing apparatus 10 may transmit the wide-view image itself to the information processing system 50. In (4), the information processing system 50 may transmit the wide-view image to the communication terminals 30B, 40A, and 40C.

### Terminology

The term "image" refers to a representation of an event visually fixed on a medium. The term "video" refers to an image displayed on a display device. Video is included in an image.

The term "site" refers to a location where activity takes place. In an embodiment of the present disclosure, a conference room is used as an example of a site. The conference room is a room used mainly for remote communication such as conferences. A conference is also referred to as a meeting, a session, a gathering, an assembly, a get-together, a briefing, or the like.

The term "device" refers to a piece of equipment that is not the general-purpose communication terminal 30B, 40A, or 40C such as a PC or a smartphone. In one example, the device is an apparatus for viewing a wide-view image. Examples of the device include the image capturing apparatus 10, the smart glasses 88, and the VR goggles 89.

The term "point-of-view information" refers to parameter information that specifies which predetermined area in a wide-view image to be displayed on the display is to be displayed on the display. In one example, a radius vector, a polar angle, and an azimuth angle of the center of the wide-view image to be displayed on the display are described as examples of the point-of-view information. In another example, the point-of-view information may be specified by other parameter information such as the coordinates of diagonal vertices.

The wide-view image refers to an image having a viewing angle in a wider range than a display range that can be displayed on the display at a time in a predetermined display method. The wide-view image has a display range corresponding to a field of view of up to 360 degrees in the vertical direction and a field of view of up to 360 degrees in the horizontal direction. In an example, the wide-view image is an image having a display range corresponding to a field of view of less than 360 degrees in the vertical and horizontal directions as long as the wide-view image has a viewing angle in a wider range than the display range that can be displayed on the display at a time. The wide-view image also includes an image having a display range wider than a range that can be visually recognized at a time by a person looking at the range. Depending on the display method, an image that can be displayed on the display at a time is also included in the wide-view image as long as the image has a wide range of viewing angles in a predetermined display method.

In one example, a spherical image in equirectangular projection format is used as an example of a wide-view image. Other examples of the wide-view image include an omnidirectional image, a hemispherical image, a three-dimensional (3D) panoramic image, a two-dimensional (2D) panoramic image, and a VR image. In the following description, it is assumed that a wide-view image includes a still image and a moving image.

An image having a normal angle of view is not a wide-view image. In an embodiment of the present disclosure, such an image is referred to as a non-wide-view image, that is, a planar image.

The term "communication group" refers to a group of users who share a wide-view image, or a group of users to whom a wide-view image is to be distributed. The communication group will be described using the term "virtual room" in the sense that in a typical space, the users in the same room can share a wide-view image. The term "virtual" refers to being implemented by information processing via a network.

Users at respective sites perform remote communication across remote locations. Remote communication refers to communication that takes place between individuals who are located in physically distant locations by using information communication devices through images and/or audio. The remote communication is a meeting, which is an online meeting, accessible from remote locations, or sites.

The meeting refers to a gathering of people for consultation, discussion, or the like. Examples of the meeting include, but are not limited to, serving a customer, a conference, an assembly, a briefing, a study session, a class, a seminar, and a presentation. The remote communication is not necessarily bidirectional communication. Thus, the virtual room may be referred to as a virtual conference room.

VR education is an educational tool that uses VR technology to encourage participants to explore interests to deepen understanding. The VR technology creates a simulated world and immerses users in the world that the users are seeing as if the users were physically present in the world. Remote customer service is customer service in which staff at a remote location provide product guidance to a user via a tablet or a display by using video conferencing.

### Example Configuration of Communication System

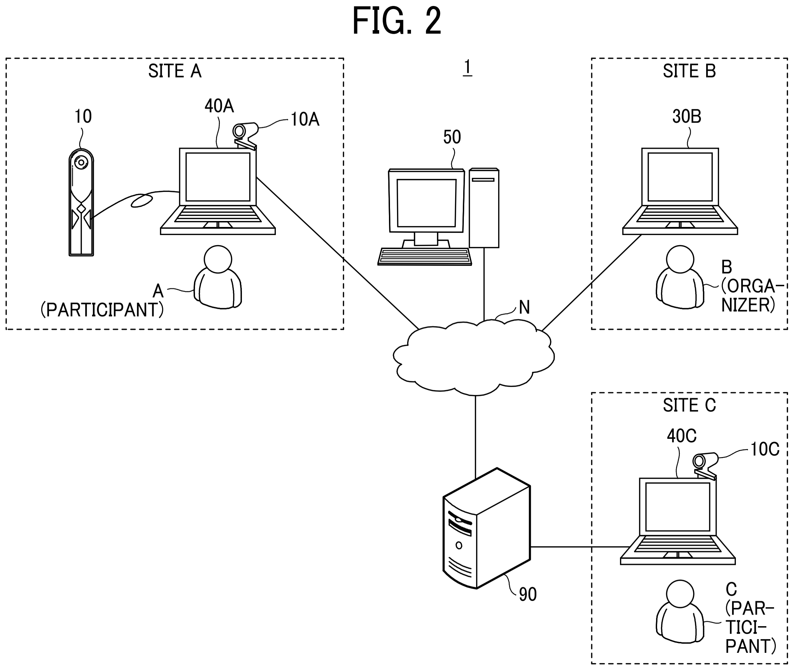

FIG. 2 is a schematic diagram illustrating an example configuration of the communication system 1 according to an embodiment of the present disclosure. The communication system 1 is a system for transmitting and receiving a wide-view image or an image having a normal angle of view captured by the image capturing apparatus 10 bidirectionally across a plurality of sites. In the communication system 1, an image distributed from one of the sites is displayed at the other sites and is viewable to users at the other sites. In an example, a spherical image captured by the image capturing apparatus 10 is distributed as the wide-view image. In the communication system 1, for example, a wide-view image captured at a predetermined site is remotely viewable at another site.

In the communication system 1, as illustrated in FIG. 2, the image capturing apparatus 10 and the communication terminal 40A placed at the site A, the information processing system 50, and the communication terminals 30B and 40C placed at a plurality of sites, namely, the sites B and C, respectively, are communicably connected to each other.

The communication terminals 30B, 40A, and 40C can communicate with the information processing system 50 via the network N. The network N includes the Internet, a mobile communication network, and a local area network (LAN), for example. The network N may include a wired communication network and a wireless communication network. The wireless communication network may be based on a wireless communication standard such as third generation (3G), fourth generation (4G), fifth generation (5G), Wireless Fidelity (Wi-Fi^{®}), Worldwide Interoperability for Microwave Access (WiMAX), or Long Term Evolution (LTE).

The image capturing apparatus 10 is a special digital image capturing apparatus configured to capture an image of an object and/or surroundings such as scenery to obtain two hemispherical images, from which a spherical image is generated. The wide-view image obtained by the image capturing apparatus 10 may be a moving image or a still image, or may include both a moving image and a still image. The captured image may be video including audio together with an image.

The communication terminals 30B, 40A, and 40C are computers such as PCs to be used by the users B, A, and C at the sites B, A, and C, respectively. Each of the communication terminals 30B, 40A, and 40C displays an image captured at the site where the respective one of the communication terminals 30B, 40A, and 40C is placed, and a wide-view image and an image having a normal angle of view, which are distributed from another site. For example, the communication terminals 30B, 40A, and 40C acquire, via the network N, a wide-view image captured by the image capturing apparatus 10.

Each of the communication terminals 30B, 40A, and 40C has installed therein software for executing image processing, such as Open Graphics Library for Embedded Systems (OpenGL ES), and can display an image based on point-of-view information that specifies a partial area in the wide-view image. OpenGL ES is an example of software for executing image processing. Any other software may be used. In an example, when software for executing image processing is not installed, image processing may be executed using software received from the outside, or a result of image processing executed by external software may be received to display an image. That is, the communication terminals 30B, 40A, and 40C can display a predetermined area, which is a portion of the wide-view image.

Each of the communication terminals 30B, 40A, and 40C can change the point of view for the display range of the wide-view image, as desired, in response to the user's operation. Each of the communication terminals 30B, 40A, and 40C shifts the virtual point of view in accordance with a user operation input on a touch panel, a direction button, a mouse, a keyboard, a touch pad, or the like to change and display a visual field range (predetermined area) based on point-of-view information corresponding to the shifted point of view. Examples of the user operation input include key input, drag, and scroll.

In an example, each of the communication terminals 30B, 40A, and 40C is a communication terminal to be worn by a user, such as VR goggles. In response to a change in the movement of a user wearing each of the communication terminals 30B, 40A, and 40C, position information of the respective one of the communication terminals 30B, 40A, and 40C is changed. In response to detection of the change in the position information, the virtual point of view is shifted in accordance with the detected position information to change a visual field range, which is a predetermined area, based on point-of-view information corresponding to the shifted point of view, and the changed visual field range is displayed.

The communication terminal 40A is placed at the site A where the user A, who is a participant in remote communication, is located. The user A is also an imaging operator who captures an image. The communication terminal 40A acquires a wide-view image from the image capturing apparatus 10 via a wired cable such as a Universal Serial Bus (USB) cable and distributes the acquired wide-view image to the communication terminals 30B and 40C at the other sites through the information processing system 50. The connection between the image capturing apparatus 10 and the communication terminal 40A may be either a wired connection using a wired cable or a wireless connection using short-range wireless communication, for example. A plurality of communication terminals 40A may be placed at the site A.

The imaging operator at the site A may wear the smart glasses 88, and the smart glasses 88 may be connected to the network N. In this case, an image captured by the smart glasses 88 may be transmitted to the information processing system 50 via the network N, and the information processing system 50 may distribute the image to the communication terminals 30B, 40A, and 40C at the respective sites.

The communication terminal 30B is placed at the site B where the user B, who is the organizer of the remote communication, is located. The communication terminal 40C is placed at the site C where the user C, who is a participant in the remote communication, is located. A plurality of communication terminals 30B may be placed at the site B, and a plurality of communication terminals 40C may be placed at the site C. The users B and C may carry the communication terminals 30B and 40C, respectively.

Each of the communication terminals 30B, 40A, and 40C at the sites B, A, and C can be internally or externally provided with the image capturing apparatus 10A or 10C. The communication terminals 30B, 40A, and 40C can respectively distribute images of the sites B, A, and C, which are captured by the image capturing apparatuses 10A and 10C and a similar apparatus thereof, to the other sites. The illustrated arrangement of the communication terminals 30B, 40A, and 40C, the image capturing apparatuses 10, and the users A to C is merely an example, and other examples may be used. Any apparatuses or devices may be placed at the sites A to C.

Examples of the communication terminals 30B, 40A, and 40C include PCs, tablet terminals, smartphones, wearable terminals, projectors, interactive white boards (IWBs), each of which is an electronic whiteboard with mutual communication capability, and telepresence robots. Each of the communication terminals 30B, 40A, and 40C is any computer on which a web browser or an application dedicated to an image distribution service operates. In an example, the image capturing apparatus 10 includes a display and displays an image distributed from another site on the display.

The information processing system 50 includes one or more information processing apparatuses. The information processing system 50 manages and controls communication among the image capturing apparatuses 10 and the communication terminals 30B, 40A, and 40C at the respective sites and manages a wide-view image to be transmitted and received. The information processing system 50 provides a platform on which a function of providing an image distribution service for distributing a wide-view image is available. The platform may be made available to a person, a company, or any other service provider that desires to provide an image distribution service, under contract. A service provider that provides an image distribution service to a user by using a platform is hereinafter referred to as a platform contractor.

The information processing system 50 may publish an application programming interface (API) as a platform, and the platform contractor may use the API to provide various image distribution services. The platform contractor mainly develops software such as an application for calling the API or the screen to be displayed on the communication terminals 30B, 40A, and 40C. That is, the functions to be provided by the API, such as image distribution, are not developed from scratch.

The information processing system 50 may be implemented by a single computer or a plurality of computers such that the functions or means of the information processing system 50 are divided into and assigned to the plurality of computers as appropriate. All or some of the functions of the information processing system 50 may be implemented by a server computer residing in a cloud environment or a server computer residing in an on-premises environment.

The storage 90 is a storage device separate from the information processing system 50. The storage 90 is cloud storage, by way of example. The storage 90 may be on-premises storage or may be storage included in the information processing system 50.

### Example Hardware Configuration

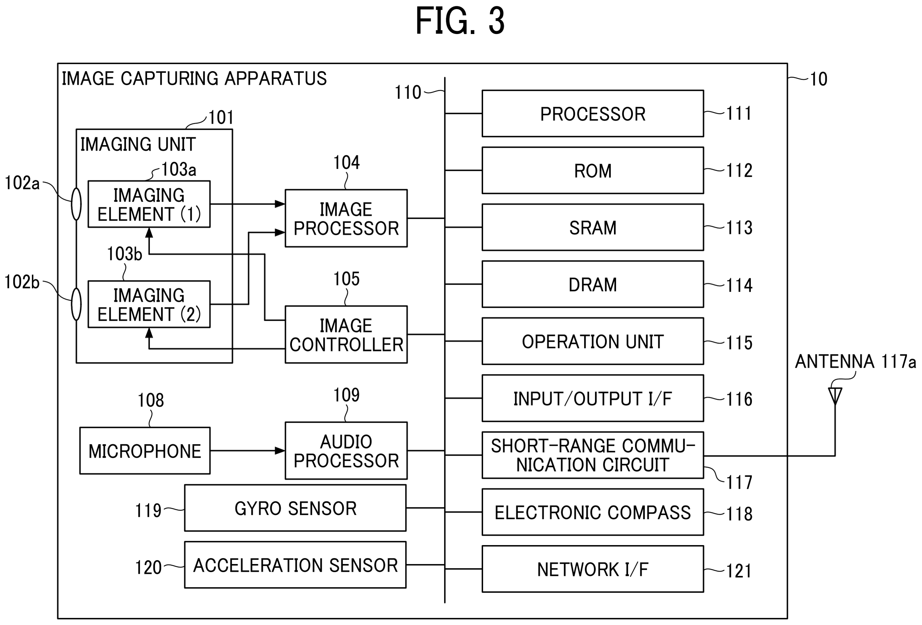

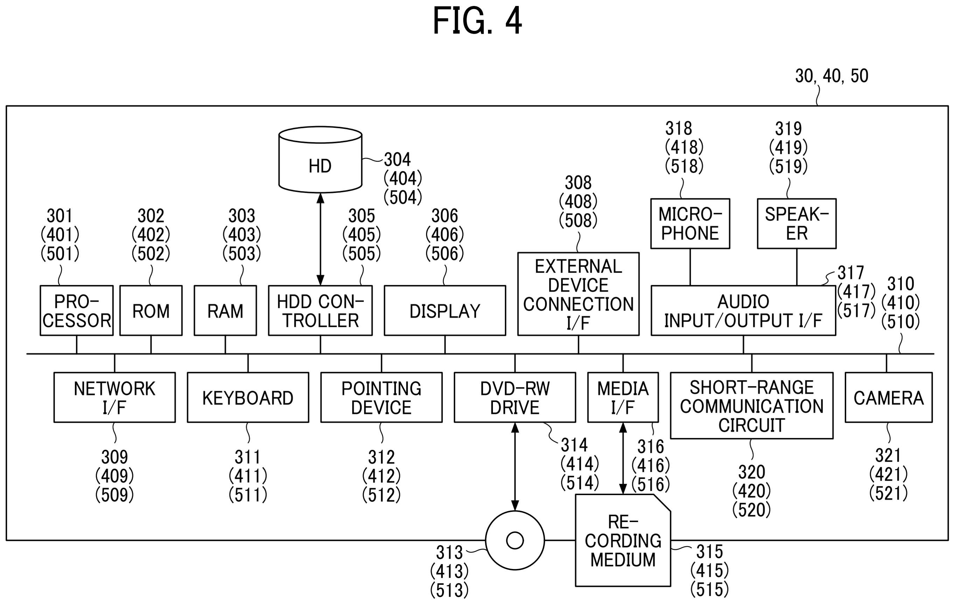

Next, the hardware configuration of each apparatus and terminal included in the communication system 1 according to the present embodiment will be described with reference to FIGs. 3 and 4. In the hardware configurations illustrated in FIGs. 3 and 4, a certain hardware element may be added or deleted as appropriate.

### Hardware Configuration of Image Capturing Apparatus

First, the hardware configuration of the image capturing apparatus 10 will be described with reference to FIG. 3. FIG. 3 is a diagram illustrating an example hardware configuration of the image capturing apparatus 10 according to an embodiment of the present disclosure. In the following description, the image capturing apparatus 10 is a spherical (omnidirectional) image capturing apparatus including two imaging elements. In some embodiments, the image capturing apparatus 10 includes any number of imaging elements, provided that the image capturing apparatus 10 includes at least two imaging elements. In one example, the image capturing apparatus 10 is not dedicated to omnidirectional image capturing, and an external omnidirectional image capturing unit may be attached to a general-purpose digital camera, a smartphone, or the like to implement functions that are substantially the same as those of the image capturing apparatus 10.

As illustrated in FIG. 3, the image capturing apparatus 10 includes an imaging unit 101, an image processor 104, an image controller 105, a microphone 108, an audio processor 109, a processor 111, a read only memory (ROM) 112, a static random access memory (SRAM) 113, and a dynamic random access memory (DRAM) 114. The image capturing apparatus 10 further includes an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes two wide-angle lenses (so-called fish-eye lenses), each having an angle of view of greater than or equal to 180 degrees so as to form a hemispherical image. The imaging unit 101 further includes two imaging elements 103a and 103b each corresponding to a respective one of the lenses. The wide-angle lenses are also referred to as fisheye lenses. The lenses 102a and 102b, which are wide-angle lenses, are collectively referred to as lenses 102 unless distinguished.

Each of the imaging elements 103a and 103b includes an image sensor such as a complementary metal oxide semiconductor (CMOS) sensor or a charge-coupled device (CCD) sensor. The image sensor converts an optical image formed by the respective one of the lenses 102a and 102b into an electric signal and outputs image data. Each of the imaging elements 103a and 103b further includes a timing generation circuit and a group of registers. The timing generation circuit generates horizontal or vertical synchronization signals, pixel clocks, and the like for the corresponding image sensor. In the group of registers, various commands, parameters, and the like for an operation of the respective one of the imaging elements 103a and 103b are set. As a non-limiting example, the imaging unit 101 includes two wide-angle lenses. The imaging unit 101 may include one wide-angle lens or three or more wide-angle lenses.

Each of the imaging elements 103a and 103b of the imaging unit 101 is connected to the image processor 104 via a parallel I/F bus. Further, each of the imaging elements 103a and 103b of the imaging unit 101 is connected to the image controller 105 via a serial I/F bus such as an inter-integrated circuit (I2C) bus. The image processor 104, the image controller 105, and the audio processor 109 are connected to the processor 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires respective image data output from the imaging elements 103a and 103b via the parallel I/F buses and performs predetermined processing on the image data. Thereafter, the image processor 104 combines the image data to generate data of an equirectangular projection image described below.

The image controller 105 usually functions as a master device while each of the imaging elements 103a and 103b usually functions as a slave device. The image controller 105 sets commands and the like in the group of registers of each of the imaging elements 103a and 103b via the I2C bus. The image controller 105 receives various commands from the processor 111. The image controller 105 further acquires status data and the like of the group of registers of each of the imaging elements 103a and 103b via the I2C bus. The image controller 105 sends the acquired status data and the like to the processor 111.

The image controller 105 instructs the imaging elements 103a and 103b to output the image data at the time when a shutter button of the operation unit 115 is pressed. In some cases, the image capturing apparatus 10 has a function of displaying a preview image on a display or a function of displaying a moving image. In the case of displaying a moving image, the imaging elements 103a and 103b continuously output image data at a predetermined frame rate (expressed in frames per minute). The display is, for example, a display of a smartphone or any other external terminal that performs short-range communication with the image capturing apparatus 10 by using the short-range communication circuit 117.

As described below, the image controller 105 operates in cooperation with the processor 111 to synchronize the time when the imaging element 103a outputs image data and the time when the imaging element 103b outputs image data. In the present embodiment, the image capturing apparatus 10 does not include display means. In some embodiments, the image capturing apparatus 10 may include a display unit. The microphone 108 converts sound into audio signal data. The audio processor 109 acquires audio data output from the microphone 108 via an I/F bus and performs predetermined processing on the audio data.

The processor 111 controls the overall operation of the image capturing apparatus 10 and performs predetermined processing. The processor 111 includes various arithmetic devices such as a central processing unit (CPU) and a graphics processing unit (GPU). The ROM 112 stores various programs to be executed by the processor 111. Each of the SRAM 113 and the DRAM 114 operates as a work memory to store programs to be executed by the processor 111 or data being currently processed. More specifically, in one example, the DRAM 114 stores image data currently processed by the image processor 104 and data of the equirectangular projection image on which processing has been performed.

The operation unit 115 collectively refers to, for example, various operation buttons, a power switch, the shutter button, and a touch panel having both a display function and an operation function. The user operates the operation unit 115 to input various image capturing modes or image capturing conditions.

The input/output I/F 116 collectively refers to an interface circuit that allows the image capturing apparatus 10 to communicate with external media such as a Secure Digital (SD) card or an external personal computer. The input/output I/F 116 may be either wired or wireless. The data of the equirectangular projection image, which is stored in the DRAM 114, is stored in an external medium via the input/output I/F 116 or transmitted to an external device via the input/output I/F 116, as desired.

The short-range communication circuit 117 communicates with an external device via the antenna 117a of the image capturing apparatus 10 by short-range wireless communication technology such as near field communication (NFC), Bluetooth^{®}, or Wi-Fi^{®}. The short-range communication circuit 117 can transmit the data of the equirectangular projection image to the external device.

The electronic compass 118 calculates an orientation of the image capturing apparatus 10 from the Earth's magnetism and outputs orientation information. The orientation information is an example of metadata that is related information in compliance with exchangeable image file format (Exif). The orientation information is used for image processing such as image correction of a captured image. The related information also includes data of a date and time when the image was captured, and data of a data size of image data. The gyro sensor 119 detects changes in orientation of the image capturing apparatus 10, including roll, pitch, and yaw angles, as the image capturing apparatus 10 moves. The change in orientation is one example of related information (metadata) in compliance with Exif. This information is used for image processing such as image correction of a captured image.

The acceleration sensor 120 detects acceleration in three axial directions. The image capturing apparatus 10 calculates the position of the image capturing apparatus 10, such as the tilt of the image capturing apparatus 10 relative to the direction of gravity, based on the acceleration detected by the acceleration sensor 120. The gyro sensor 119 and the acceleration sensor 120 of the image capturing apparatus 10 improve the accuracy of image correction.

The network I/F 121 is an interface for performing data communication using the network N, such as the Internet, via a router or the like.

### Hardware Configuration of Communication Terminal

FIG. 4 is a diagram illustrating an example hardware configuration of the first communication terminal 30, the second communication terminal 40, and the information processing system 50 according to an embodiment of the present disclosure. First, the first communication terminal 30 will be described. Each hardware element of the first communication terminal 30 is denoted by a reference numeral in 300 series.

The first communication terminal 30 includes a processor 301, a ROM 302, a RAM 303, a hard disk (HD) 304, a hard disk drive (HDD) controller 305, a display 306, an external device connection I/F 308, a network I/F 309, and a bus line 310. The first communication terminal 30 further includes a keyboard 311, a pointing device 312, a digital versatile disc rewritable (DVD-RW) drive 314, a media I/F 316, an audio input/output I/F 317, a microphone 318, a speaker 319, a short-range communication circuit 320, and a camera 321.

The processor 301 controls the overall operation of the first communication terminal 30. The processor 301 includes various arithmetic devices such as a CPU and a GPU. The ROM 302 stores a program used for booting the processor 301, such as an initial program loader (IPL). The RAM 303 is used as a work area for the processor 301. The HD 304 stores various types of data such as a program. The first communication terminal 30 executes a program according to an embodiment of the present disclosure to implement a communication method according to an embodiment of the present disclosure.

The HDD controller 305 controls reading or writing of various types of data from or to the HD 304 under the control of the processor 301. The display 306 displays various types of information such as a cursor, a menu, a window, characters, and an image. The display 306 is an example of a display unit. In one example, the display 306 is a touch panel display provided with input means.

The external device connection I/F 308 is an interface for connecting to various external devices. Examples of the external devices include a USB memory and a printer. The network I/F 309 is an interface for performing data communication using the network N. The bus line 310 is, for example, an address bus or a data bus for electrically connecting the components illustrated in FIG. 4, such as the processor 301, to one another.

The keyboard 311 is an example of input means including a plurality of keys for inputting characters, numerical values, various instructions, and the like. The pointing device 312 is an example of input means used for selecting or executing various instructions, selecting a target for processing, or moving a cursor being displayed. The input means are not limited to the keyboard 311 and the pointing device 312 and may include a touch panel and an audio input device. The DVD-RW drive 314 controls reading or writing of various types of data from or to a DVD-RW 313, which is an example of a removable recording medium. The DVD-RW 313 is an example, and a digital versatile disk recordable (DVD-R), a Blu-ray Disc^{®}, or any other recording medium may be used instead.

The media I/F 316 controls reading or writing of data from or to a recording medium 315 such as flash memory. The microphone 318 is an example of built-in audio capturing means for receiving audio input. The audio input/output I/F 317 is a circuit for controlling input and output of audio signals between the microphone 318 and the speaker 319 under the control of the processor 301. The short-range communication circuit 320 communicates with an external device using short-range wireless communication technology such as NFC, Bluetooth^{®}, or Wi-Fi^{®}. The camera 321 is an example of built-in image capturing means for capturing an image of an object to obtain image data. In one example, the microphone 318, the speaker 319, and the camera 321 are devices external to the first communication terminal 30 as an alternative to built-in devices.

### Hardware Configuration of Second Communication Terminal

As illustrated in FIG. 4, each hardware element of the second communication terminal 40 is denoted by a reference numeral in 400 series in parentheses. The second communication terminal 40 is implemented by one or more computers and has substantially the same configuration as that of the first communication terminal 30, as illustrated in FIG. 4, and thus the description of the hardware elements of the second communication terminal 40 will be omitted.

Each of the programs described above may be recorded as a file in an installable or executable format on a computer-readable recording medium for distribution. Examples of the recording medium include a compact disc recordable (CD-R), a digital versatile disc (DVD), a Blu-ray Disc^{®}, an SD card, and a USB memory. Such recording media may be provided in the form of program products to domestic or international users. For example, the second communication terminal 40 executes a program according to an embodiment of the present disclosure to implement a communication method according to an embodiment of the present disclosure.

### Hardware Configuration of Information Processing System

As illustrated in FIG. 4, each hardware element of the information processing system 50 is denoted by a reference numeral in 500 series in parentheses. The information processing system 50 is implemented by one or more computers and has substantially the same configuration as that of the first communication terminal 30, as illustrated in FIG. 4, and thus the description of the hardware elements of the information processing system 50 will be omitted.

Each of the programs described above may be recorded as a file in an installable or executable format on a computer-readable recording medium for distribution. Examples of the recording medium include a CD-R, a DVD, a Blu-ray Disc^{®}, an SD card, and a USB memory. Such recording media may be provided in the form of program products to domestic or international users. For example, the information processing system 50 executes a program according to an embodiment of the present disclosure to implement a communication method according to an embodiment of the present disclosure.

### Wide-View Image and Point-of-View Information

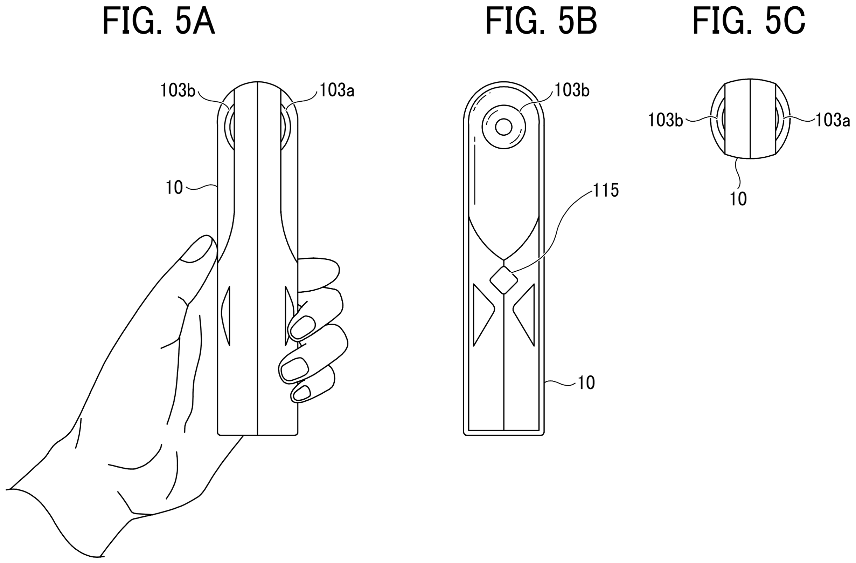

A method for generating a wide-view image (spherical image) will be described hereinafter with reference to FIGs. 5A to 12. First, the external appearance of the image capturing apparatus 10 will be described with reference to FIGs. 5A to 5C. FIGs. 5A, 5B, and 5C are example external views of the image capturing apparatus 10 according to an embodiment of the present disclosure. The image capturing apparatus 10 is a digital camera for capturing images from which a 360-degree spherical image is generated. FIG. 5A is a left side view of the image capturing apparatus 10. FIG. 5B is a front view of the image capturing apparatus 10. FIG. 5C is a plan view of the image capturing apparatus 10. The illustrated external view of the image capturing apparatus 10 is merely an example. The image capturing apparatus 10 may have any other external appearance.

As illustrated in FIG. 5A, the image capturing apparatus 10 has a size such that a person can hold the image capturing apparatus 10 with one hand. The illustrated shape of the image capturing apparatus 10 is an example. The image capturing apparatus 10 may have any other shape. As illustrated in FIGs. 5A, 5B, and 5C, the imaging element 103a and the imaging element 103b are disposed in an upper portion of the image capturing apparatus 10 such that the imaging element 103a is disposed on the front side and the imaging element 103b is disposed on the back side. The imaging elements 103a and 103b are used in combination with optical members such as the lenses 102a and 102b, each being configured to capture a hemispherical image having an angle of view of greater than or equal to 180 degrees. As illustrated in FIG. 5B, the operation unit 115, such as a shutter button, is disposed on the back surface of the image capturing apparatus 10. As described above, the image capturing apparatus 10 may include one imaging element or three or more imaging elements.

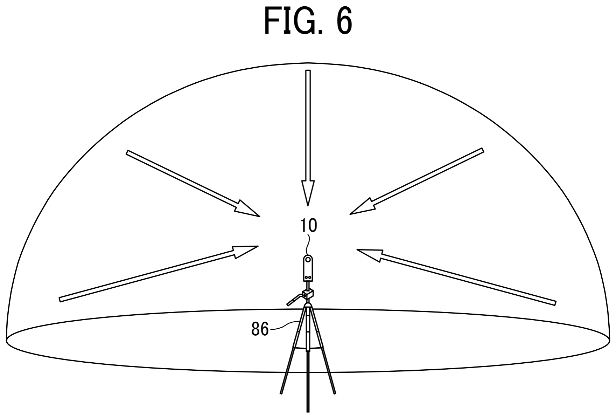

Next, an example of use of the image capturing apparatus 10 will be described with reference to FIG. 6. FIG. 6 is an illustration of an example of how the image capturing apparatus 10 is used. As illustrated in FIG. 6, for example, the image capturing apparatus 10 is used for capturing an image of an object surrounding the image capturing apparatus 10. Each of the imaging elements 103a and 103b illustrated in FIGs. 5A to 5C captures an image of an object surrounding the image capturing apparatus 10. As a result, two hemispherical images are obtained.

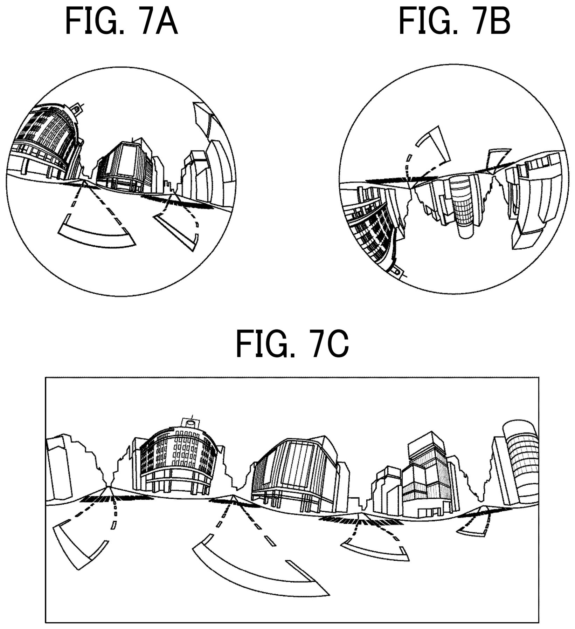

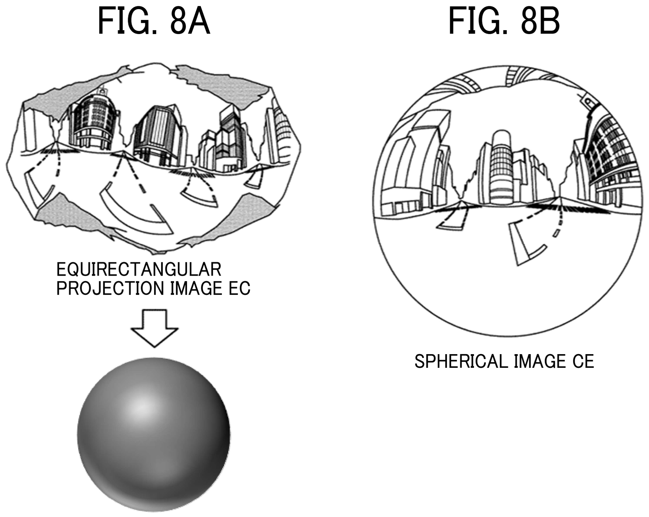

Next, an overview of a process for generating a spherical image from images captured by the image capturing apparatus 10 will be described with reference to FIGs. 7A to 7C and FIGs. 8A and 8B. FIGs. 7A to 7C and FIGs. 8A and 8B illustrate a process for generating a spherical image from images captured by the image capturing apparatus 10 according to an embodiment of the present disclosure.

FIG. 7A illustrates a hemispherical image (front side) captured by the image capturing apparatus 10. FIG. 7B illustrates a hemispherical image (back side) captured by the image capturing apparatus 10. FIG. 7C illustrates an image in equirectangular projection (hereinafter referred to as an "equirectangular projection image" or an "equidistant cylindrical projection image"). FIG. 8A conceptually illustrates how the equirectangular projection image is mapped to a surface of a sphere. FIG. 8B illustrates a spherical image.

As illustrated in FIG. 7A, an image obtained by the imaging element 103a is a curved hemispherical image (front side) captured through the lens 102a described above. As illustrated in FIG. 7B, an image captured by the imaging element 103b is a curved hemispherical image (back side) captured through the lens 102b described above. The image capturing apparatus 10 combines the hemispherical image (front side) and the hemispherical image (back side), which are flipped by 180 degrees, to create an equirectangular projection image EC as illustrated in FIG. 7C.

The image capturing apparatus 10 uses software such as OpenGL ES to map the equirectangular projection image EC to a sphere so as to cover the surface of the sphere, as illustrated in FIG. 8A. As a result, the image capturing apparatus 10 generates a spherical image CE as illustrated in FIG. 8B. The spherical image CE is also referred to as a spherical panoramic image.

That is, the spherical image CE is represented as the equirectangular projection image EC, which corresponds to a surface facing the center of the sphere. OpenGL ES is a graphics library used for visualizing 2D data and 3D data. OpenGL ES is an example of software for executing image processing. Any other software may be used to create the spherical image CE. The spherical image CE may be either a still image or a moving image.

As described above, since the spherical image CE is an image mapped to a sphere in such a manner as to cover the surface of the sphere, part of the image may look distorted when viewed by a user, providing a strange feeling. Accordingly, the image capturing apparatus 10 displays an image of a predetermined area T, which is part of the spherical image CE, as a planar image having fewer curves to make the user feel comfortable. The predetermined area is, for example, a part of the spherical image CE that is viewable by the user. In this disclosure, the image of the predetermined area, which is viewable, may be referred to as a "predetermined-area image" or "viewable-area image" Q. That is, the terms "predetermined-area image" and "viewable-area image" may be used interchangeably.

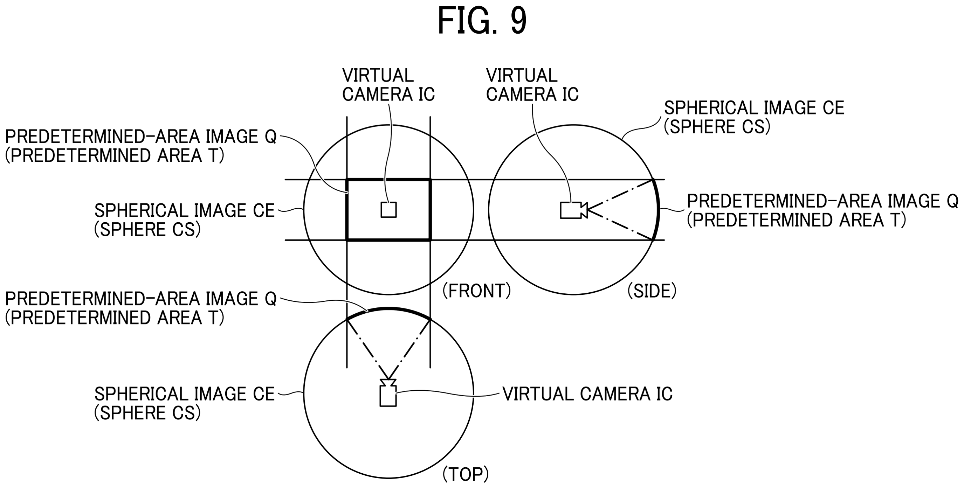

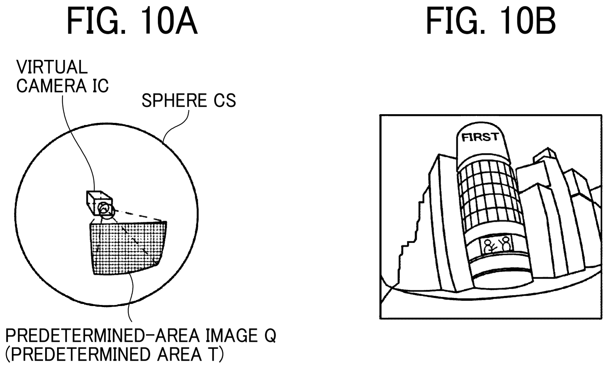

The display of the predetermined-area image will be described with reference to FIGs. 9, 10A, and 10B. FIG. 9 is a diagram illustrating the position of a virtual camera IC and the position of the predetermined area T in a case where the spherical image CE is of a three-dimensional sphere CS. The position of the virtual camera IC corresponds to the position of a point of view (viewpoint) of a user who is viewing the spherical image CE represented as a surface area of the three-dimensional solid sphere CS. FIGs. 10A and 10B illustrate the virtual camera IC and the predetermined area T illustrated in FIG. 9 and a predetermined-area image displayed on a display, respectively. FIG. 10A is a perspective view of the virtual camera IC and the predetermined area T illustrated in FIG. 9, and FIG. 10B is a diagram illustrating the predetermined-area image displayed on the display. In FIG. 10A, the spherical image CE illustrated in FIG. 9 is represented by the three-dimensional sphere CS.

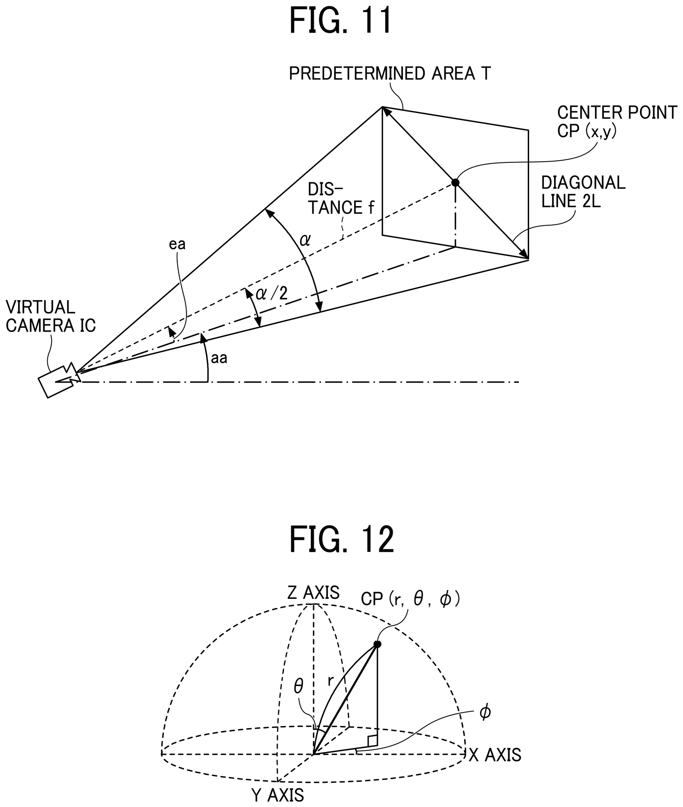

Assuming that the spherical image CE generated in the way described above is a surface area of the sphere CS, the virtual camera IC is inside the spherical image CE as illustrated in FIG. 9. The predetermined area T in the spherical image CE is an imaging area of the virtual camera IC. Specifically, the predetermined area T is specified by predetermined-area information indicating an imaging direction and an angle of view of the virtual camera IC in a three-dimensional virtual space containing the spherical image CE. Zooming in or out of the predetermined area T may be implemented by bringing the virtual camera IC closer to or farther away from the spherical image CE. The predetermined-area image Q is an image of the predetermined area T in the spherical image CE. The predetermined area T is defined by an angle of view α of the virtual camera IC and a distance f from the virtual camera IC to the spherical image CE (see FIG. 11).

The predetermined-area image Q illustrated in FIG. 10A is displayed on a predetermined display as an image of the imaging area of the virtual camera IC, as illustrated in FIG. 10B. The image illustrated in FIG. 10B is a predetermined-area image represented by predetermined-area information that is set by default. A description will be made using the imaging direction (ea, aa) and the angle of view (α) of the virtual camera IC. In another example, the predetermined area T is not defined by the angle of view α and the distance f, and the imaging area of the virtual camera IC, which is the predetermined area T, is identified by position coordinates (X, Y, Z).

Next, the relationship between the predetermined-area information and the image of the predetermined area T will be described with reference to FIG. 11. FIG. 11 is a diagram illustrating the relationship between the predetermined-area information and the image of the predetermined area T.

As illustrated in FIG. 11, "ea" denotes an elevation angle, "aa" denotes an azimuth angle, and "α" denotes an angle of view of the virtual camera IC. The position of the virtual camera IC is adjusted such that the point of gaze of the virtual camera IC, indicated by the imaging direction (ea, aa), matches a center point CP (x, y) of the predetermined area T serving as the imaging area of the virtual camera IC. The center point CP (x, y) of the predetermined area T, whose diagonal angle of view is represented by the angle of view α of the virtual camera IC and is denoted by α, is used as a parameter (x, y) of the predetermined-area information. The predetermined-area image Q is an image of the predetermined area T in the spherical image CE. The distance f is the distance from the virtual camera IC to the center point CP (x, y) of the predetermined area T. The distance between the center point CP (x, y) and a given vertex of the predetermined area T is denoted by "L" (2L is a diagonal line). In FIG. 11, a trigonometric function generally expressed by Equation (1) below holds. $L / f = tan \left(\frac{α}{2}\right)$

The spherical image CE is an example of a wide-view image. The wide-view image is generally an image captured with a wide-angle lens such as a lens that can capture an image of a range wider than a range that the human eye can perceive.

FIG. 12 is a diagram illustrating the relationship illustrated in FIG. 11 using a point in a three-dimensional Euclidean space defined in spherical coordinates. The center point CP illustrated in FIG. 11 is represented by a spherical polar coordinate system to obtain position coordinates (r, 0, φ). The position coordinates (r, θ, φ) represent a radius vector, a polar angle, and an azimuth angle, respectively. The radius vector r is the distance from the origin of the three-dimensional virtual space including the spherical image CE to the center point CP. Accordingly, the radius vector r is equal to the distance f illustrated in FIG. 11. FIG. 12 illustrates the relationship illustrated in FIG. 11. In the following description, the position coordinates (r, θ, φ) of the virtual camera IC are used as an example of point-of- view information.

As described above, the point-of-view information is any parameter information that can define the predetermined area T (the predetermined-area image Q) displayed on the predetermined display illustrated in FIG. 10A as the image of the imaging area of the virtual camera IC. The point-of-view information includes the coordinates of the diagonal vertices of the predetermined area T. In an example, the point-of-view information includes information indicating the angle of view α of the virtual camera IC and information indicating the center point CP (x, y), which have been described with reference to FIG. 11. Examples of the point-of-view information include position coordinate information in the form of spherical coordinates, position coordinate information in the form of orthogonal coordinates, and a difference value between the predetermined-area information that is set by default and the coordinates.

Other examples of the point-of-view information include information other than coordinate information, such as an angle and a distance, as illustrated in FIG. 11. In FIGs. 11 and 12, the center point CP of the predetermined area T is used as a reference. In another example, the predetermined area T may be defined by parameter information with any one of the vertices of the predetermined area T as a reference. In the foregoing description of the point-of-view information, as a non-limiting example, the wide-view image is a spherical image. In another wide-view image, information that defines the predetermined area T in the other wide-view image is point-of-view information.

### Functional Configuration

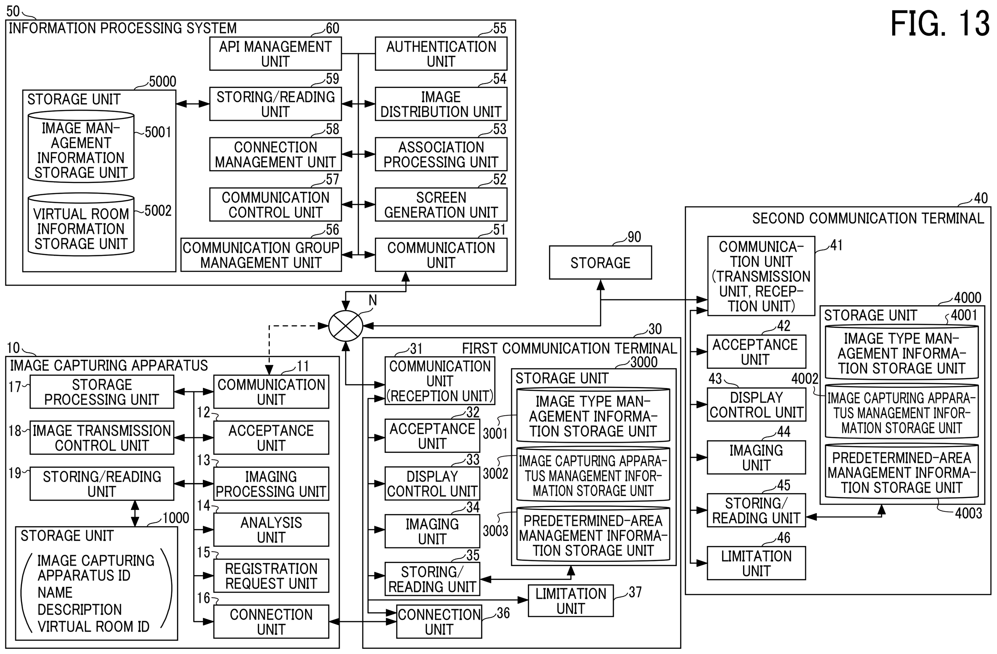

Next, the functional configuration of the communication system 1 according to the present embodiment will be described with reference to FIG. 13. FIG. 13 is a block diagram illustrating an example functional configuration of the communication system 1 according to an embodiment of the present disclosure. FIG. 13 illustrates functions, related to processes or operations described below, of the terminals, the apparatuses, and the server illustrated in FIG. 1.

### Functional Configuration of Image Capturing Apparatus

First, the functional configuration of the image capturing apparatus 10 will be described with reference to FIG. 13. The image capturing apparatus 10 includes a communication unit 11, an acceptance unit 12, an imaging processing unit 13, an analysis unit 14, a registration request unit 15, a connection unit 16, a storage processing unit 17, an image transmission control unit 18, and a storing/reading unit 19. Each unit is a function or means implemented by or caused to function by one or more of the hardware elements illustrated in FIG. 3 operating in accordance with instructions from the processor 111 according to a program loaded onto the SRAM 113 or the DRAM 114. The image capturing apparatus 10 further includes a storage unit 1000, which is implemented by, for example, the ROM 112 illustrated in FIG. 3. The image capturing apparatuses 10A and 10C illustrated in FIG. 1 may have the configuration of the image capturing apparatus 10.

The communication unit 11 connects to the network N using wireless communication technology such as Wi-Fi^{®} to transmit and receive various types of data or information to and from another apparatus. In the present embodiment, the connection unit 16 transmits a wide-view image acquired by the imaging processing unit 13 to the information processing system 50, by way of example. In another example, the communication unit 11 may transmit the wide-view image to the information processing system 50.

The acceptance unit 12 receives an operation input for the image capturing apparatus 10 from a user. The acceptance unit 12 receives an operation input for, for example, turning on or off the power or pressing or releasing the shutter button to, for example, start or stop the transmission of a wide-view image.

The imaging processing unit 13 captures an image of an object or surroundings such as scenery and acquires a captured image. The captured image acquired by the imaging processing unit 13 may be at least one of a moving image and a still image, and may include audio together with an image. Further, for example, the imaging processing unit 13 captures an image of a two-dimensional code displayed on the display 306 of the first communication terminal 30.

The analysis unit 14 analyzes the two-dimensional code, which is obtained from an image captured by the imaging processing unit 13, and extracts information included in the two-dimensional code. The information included in the two-dimensional code includes a URL for registering the image capturing apparatus 10 in the virtual room or the like, a temporary ID, and a password.

The registration request unit 15 transmits a request to the information processing system 50 to register the image capturing apparatus 10 in the virtual room, by using the information included in the two-dimensional code read by the analysis unit 14.

The connection unit 16 is implemented by, for example, the short-range communication circuit 117, and receives a supply of power from the communication terminal 40A and performs data communication.

The storage processing unit 17 performs processing to store a wide-view image captured in response to an image capturing request from any site in a location specified by a URL transmitted from the information processing system 50. The wide-view image is stored in, for example, the storage 90.

The image transmission control unit 18 controls transmission of a wide-view image to the information processing system 50. For example, the image transmission control unit 18 transmits a captured image acquired by the imaging processing unit 13 to the information processing system 50 periodically or in response to a user operation when the captured image is a still image, or at a predetermined frame rate (expressed in frames per second, or FPS) when the captured image is a moving image. The image transmission control unit 18 also performs switching between the communication unit 11 and the connection unit 16.

The storing/reading unit 19 stores various types of data in the storage unit 1000 or reads various types of data from the storage unit 1000. The storage unit 1000 stores captured image data acquired by the imaging processing unit 13, an image capturing apparatus ID, and the like. The captured image data stored in the storage unit 1000 is deleted when a predetermined amount of time has elapsed after the captured image data was acquired by the imaging processing unit 13. Alternatively, the data transmitted to the information processing system 50 may be deleted from the storage unit 1000.

The image capturing apparatus 10 has installed therein an application for supporting the communication system 1. The application is not used when the image capturing apparatus 10 is a commercially available image capturing apparatus, but otherwise is used to associate the image capturing apparatus 10 with a virtual room or to receive external control. Some of the functions illustrated in FIG. 13, such as the registration request unit 15, are implemented by the application.

### Functional Configuration of First Communication Terminal

Next, the functional configuration of the first communication terminal 30 will be described with reference to FIG. 13. The first communication terminal 30 includes a communication unit 31, an acceptance unit 32, a display control unit 33, an imaging unit 34, a storing/reading unit 35, a connection unit 36, and a limitation unit 37. Each unit is a function or means implemented by or caused to function by one or more of the hardware elements illustrated in FIG. 4 operating in accordance with instructions from the processor 301 according to a program loaded onto the RAM 303. The first communication terminal 30 further includes a storage unit 3000, which is implemented by the ROM 302 or the recording medium 315 illustrated in FIG. 4.

The communication unit 31 is an example of a reception unit. The communication unit 31 is implemented by, for example, the network I/F 309, and connects to the network N to transmit and receive various types of data or information to and from another apparatus. The communication unit 31 receives point-of-view information for specifying a predetermined area in a wide-view image that is being displayed on the second communication terminal 40, which is a source apparatus.

The acceptance unit 32 receives various selections or operation inputs for the first communication terminal 30. The display control unit 33 causes the display 306 of the first communication terminal 30 to display a wide-view image, an image having a normal angle of view, and various screens. For example, the display control unit 33 causes the display 306 to display a two-dimensional code transmitted from the information processing system 50. In one example, the two-dimensional code is a QR code^{®}, a DataMatrix (DataCode) code, a MaxiCode code, or a PDF417 code. In another example, the two-dimensional code is a barcode.

When point-of-view information for specifying a predetermined area in a wide-view image that is being displayed on the display 406 is received from the second communication terminal 40, which is a source apparatus, the display control unit 33 displays, based on the received point-of-view information, a point of view of the second communication terminal 40, which is a source apparatus, in a superimposed manner on the predetermined area in the wide-view image that is being displayed on the first communication terminal 30.

The connection unit 36 is implemented by, for example, the short-range communication circuit 320, and supplies power to the image capturing apparatus 10 and performs data communication.

The limitation unit 37 limits the number of points of view to be superimposed, based on a connection policy including settings related to point-of-view information. The number of points of view may be limited by limiting destinations to which a point-of-view information transmission instruction is to be transmitted among the second communication terminals 40 in order to acquire points of view to be superimposed.

The point-of-view information transmission instruction includes information related to a limitation on a transmission count of point-of-view information per unit time. The point-of-view information transmission instruction is transmitted at any frequency, such as 15 times per second or 30 times per second. The limitation unit 37 limits the number of points of view to be displayed in a superimposed manner, by way of example, but not limitation. A time during which points of view are displayed in a superimposed manner may be limited.

The connection policy includes various settings such as the amount of traffic on the network N, the number of points of view to be superimposed, and a connection time. The connection policy is set in accordance with an environment such as device information and communication states of the first communication terminal 30 and the second communication terminals 40. Preferably, the connection policy is set such that the quality of video and audio is ensured in remote communication and superimposition of points of view does not impede viewing the video. A plurality of connection policies may be set.

The storing/reading unit 35 stores various types of data in the storage unit 3000 or reads various types of data from the storage unit 3000 in accordance with instructions from the processor 301 illustrated in FIG. 4. The storage unit 3000 includes an image type management information storage unit 3001, an image capturing apparatus management information storage unit 3002, and a predetermined-area management information storage unit 3003.

### Image Type Management Information Storage Unit 3001

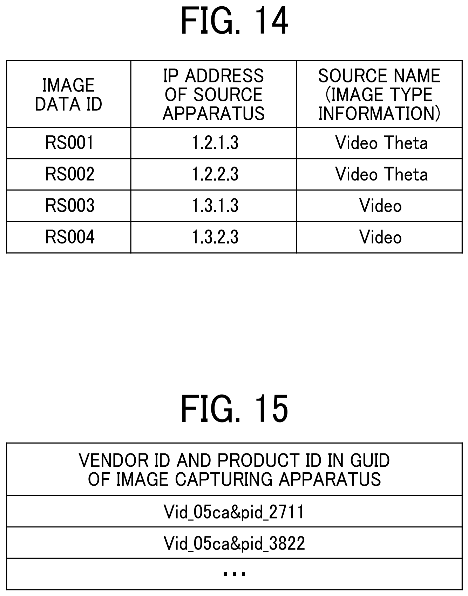

FIG. 14 is a diagram illustrating an example of image type management information according to an embodiment of the present disclosure. The image type management information storage unit 3001 stores image type management information as illustrated in FIG. 14.

In the image type management information, an image data identification (ID), an Internet protocol (IP) address of a source apparatus, and a source name are stored and managed in association with one another. The IP address of a source apparatus is an example of an address of a source apparatus. The image data ID is an example of image data identification information for identifying image data for video communication. The same image data ID is assigned to image data transmitted from the same source apparatus. Accordingly, the second communication terminal 40 to which image data is to be transmitted can identify the first communication terminal 30 that is a source apparatus from which the image data is received.

The IP address of the source apparatus indicates an IP address of an apparatus from which image data indicated by the associated image data ID is transmitted. The source name is a name for identifying the image capturing apparatus 10 from which image data indicated by the associated image data ID is output. The source name is a name created by each communication terminal, such as the first communication terminal 30, in accordance with a predetermined naming rule.

The illustrated example indicates that four communication terminals with the IP addresses "1.2.1.3", "1.2.2.3", "1.3.1.3", and "1.3.2.3" transmit image data indicated by the image data IDs "RS001", "RS002", "RS003", and "RS004", respectively. The illustrated example further indicates that the respective source names of the communication terminals specify image types "Video_Theta", "Video_Theta", "Video", and "Video", representing "special image", "special image", "general image", and "general image", respectively. In one example, the special image is a spherical panoramic image.

Data other than image data may also be managed in association with an image data ID. Examples of the data other than image data include audio data and presentation material data to be shared on a screen. In addition, data other than image data may be managed in association with an image data ID. Examples of the data other than image data include audio data and presentation material data to be shared on a screen.

### Image Capturing Apparatus Management Information Storage Unit 3002

FIG. 15 is a diagram illustrating an example of image capturing apparatus management information according to an embodiment of the present disclosure. The image capturing apparatus management information storage unit 3002 stores image capturing apparatus management information as illustrated in FIG. 15.

In the image capturing apparatus management information, a vendor ID and a product ID, which are part of a globally unique identifier (GUID) of the image capturing apparatus 10 that can obtain two hemispherical images from which a spherical panoramic image is generated, are stored and managed. As the GUID, a combination of a vendor ID (VID) and a product ID (PID) used in a USB device is used, for example. The vendor ID and the product ID are stored at the time of factory shipment of the image capturing apparatus 10, but may be additionally stored after factory shipment.

### Predetermined-Area Management Information Storage Unit 3003

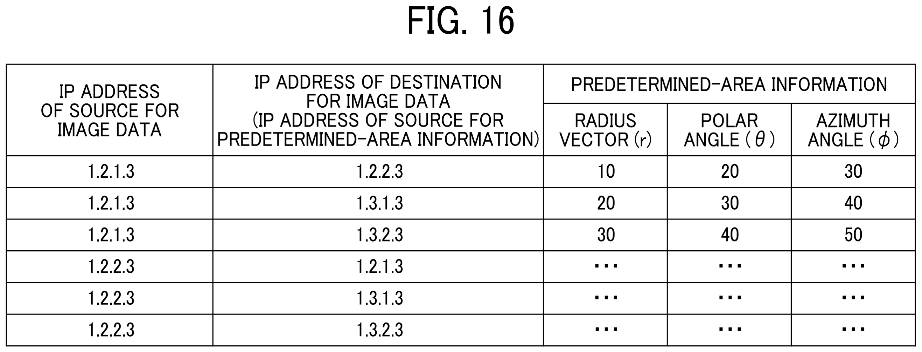

FIG. 16 is a diagram illustrating an example of predetermined-area management information according to an embodiment of the present disclosure. The predetermined-area management information storage unit 3003 stores predetermined-area management information as illustrated in FIG. 16.

In the predetermined-area management information, an IP address of the first communication terminal 30 that transmits captured image data, an IP address of the second communication terminal 40 that is to receive the captured image data, and predetermined-area information indicating a predetermined-area image being displayed on the second communication terminal 40 that is to receive the captured image data are associated with one another.

The predetermined-area information is a conversion parameter for converting a captured image into the image of the predetermined area T (i.e., the predetermined-area image Q) in the captured image. The IP address is an example of address information, and the address information includes, for example, a Media Access Control (MAC) address and a terminal ID for identifying a communication terminal, examples of which include the first communication terminal 30 and the second communication terminal 40. In one example, the IP address is a simplified representation of the Internet Protocol version 4 (IPv4) address. The IP address may be an Internet Protocol version 6 (IPv6) address.

For example, the first to third rows of the predetermined-area management information indicate that the IP address of the first communication terminal 30 is "1.2.1.3". In this case, captured image data transmitted from the first communication terminal 30 is transmitted to apparatuses with the IP addresses "1.2.2.3", "1.3.1.3", and "1.3.2.3" via the information processing system 50. It is also indicated that the second communication terminal 40 is any one of the apparatuses with the IP addresses "1.2.2.3", "1.3.1.3", and "1.3.2.3" from which predetermined-area information (r = 10, θ = 20, φ = 30) is transmitted.

Further, the communication unit 31 newly receives predetermined-area management information including IP address pairs that are the same as already managed IP address pairs including the IP address of the first communication terminal 30 or the second communication terminal 40 from which captured image data is transmitted and the IP addresses of the first communication terminals 30 and the second communication terminals 40 to which the captured image data is to be transmitted. At this time, the storing/reading unit 35 rewrites the already managed predetermined-area management information with the newly received predetermined-area management information.

### Functional Configuration of Second Communication Terminal

The second communication terminal 40 includes a communication unit 41, an acceptance unit 42, a display control unit 43, an imaging unit 44, a storing/reading unit 45, and a limitation unit 46. The storing/reading unit 45 stores various types of data in the storage unit 4000 or reads various types of data from the storage unit 4000. The storage unit 4000 includes an image type management information storage unit 4001, an image capturing apparatus management information storage unit 4002, and a predetermined-area management information storage unit 4003. The image type management information storage unit 4001, the image capturing apparatus management information storage unit 4002, and the predetermined-area management information storage unit 4003 are substantially the same as the image type management information storage unit 3001, the image capturing apparatus management information storage unit 3002, and the predetermined-area management information storage unit 3003, respectively, and a description thereof will be omitted.

Each unit of the second communication terminal 40 is a function or means implemented by or caused to function by one or more of the hardware elements illustrated in FIG. 4 operating in accordance with instructions from the processor 401 according to a program loaded onto the RAM 403.

The communication unit 41 is an example of a transmission unit and a reception unit. The communication unit 41 receives a point-of-view information transmission instruction transmitted from the first communication terminal 30 to the second communication terminal 40 that is a selected source apparatus. The communication unit 41 transmits point-of-view information for specifying a predetermined area in a wide-view image that is being displayed to the first communication terminal 30. The communication unit 41 may transmit point-of-view information to the first communication terminal 30 in response to receiving a point-of-view information transmission instruction from the first communication terminal 30. The limitation unit 46 limits transmission of point-of-view information to the first communication terminal 30, based on a connection policy including settings related to the point-of-view information. The limitation unit 46 may limit transmission of point-of-view information in various ways. In one example, the limitation unit 46 does not transmit point-of-view information if no point-of-view information transmission instruction has been received. In another example, the limitation unit 46 stores point-of-view information until communication ends, and transmits the stored point-of-view information after the communication ends. In another example, the limitation unit 46 does not transmit point-of-view information if the point-of-view information does not change for a predetermined time.

The other functions of the second communication terminal 40, namely, the communication unit 41, the acceptance unit 42, the display control unit 43, the imaging unit 44, and the storing/reading unit 45, have substantially the same configurations as the communication unit 31, the acceptance unit 32, the display control unit 33, the imaging unit 34, and the storing/reading unit 35 of the first communication terminal 30, respectively, and a description thereof will be omitted.

### Functional Configuration of Information Processing System

Next, the functional configuration of the information processing system 50 will be described with reference to FIG. 13. The information processing system 50 includes a communication unit 51, a screen generation unit 52, an association processing unit 53, an image distribution unit 54, an authentication unit 55, a communication group management unit 56, a communication control unit 57, a connection management unit 58, a storing/reading unit 59, and an API management unit 60. Each unit is a function or means implemented by or caused to function by one or more of the hardware elements illustrated in FIG. 4 operating in accordance with instructions from the processor 501 according to a program loaded onto the RAM 503. The information processing system 50 further includes a storage unit 5000, which is implemented by the ROM 502, the HD 504, or the recording medium 515 illustrated in FIG. 4.

The communication unit 51 transmits and receives various types of data or information to and from another apparatus via the network N.

The screen generation unit 52 generates screen information to be displayed on the first communication terminal 30 and the second communication terminal 40. In a case where the first communication terminal 30 and the second communication terminal 40 execute a web application, the screen information is created by Hypertext Markup Language (HTML), Extensible Markup Language (XML), Cascading Style Sheets (CSS), JavaScript^{®}, or any other language. In a case where the first communication terminal 30 and the second communication terminal 40 execute a native application, the screen information is held by the first communication terminal 30 and the second communication terminal 40, and the information to be displayed is transmitted in XML or the like. The screen generation unit 52 generates screen information in which a wide-view image or the like to be distributed by the image distribution unit 54 is arranged.

The association processing unit 53 performs control related to sharing of point-of-view information of a wide-view image. In response to receipt of an image capturing request together with point-of-view information from the first communication terminal 30 and the second communication terminal 40, the association processing unit 53 performs processing to associate the point-of-view information with a wide-view image acquired from the image capturing apparatus 10 in response to an image capturing request. The association processing unit 53 stores the wide-view image and the point-of-view information, which are associated with each other, in an image management information storage unit 5001. Further, the association processing unit 53 transmits a URL, which is information indicating a storage location where the associated wide-view image and point-of-view information are to be stored, to the first communication terminal 30 and the second communication terminal 40.

The image distribution unit 54 distributes, to the first communication terminal 30 and the second communication terminal 40 operated by users who are in the virtual room, a wide-view image transmitted from the image capturing apparatus 10 associated with the same virtual room. An image having a normal angle of view captured by each of cameras included in the first communication terminal 30 and the second communication terminals 40 or each of the image capturing apparatuses 10A and 10C connected to the second communication terminals 40 is also distributed in a similar manner.

The authentication unit 55 authenticates, based on an authentication request received by the communication unit 51, the request source. For example, the authentication unit 55 determines whether authentication information included in the authentication request received by the communication unit 51 matches authentication information held in advance to perform user authentication. In one example, the authentication information includes a user ID and a password. In another example, the authentication information is a card number of an integrated circuit (IC) card or biometric authentication information such as a face, a fingerprint, or a voiceprint. The authentication unit 55 may perform authentication using an external authentication system or an authentication method such as Open Authorization (OAuth).

The communication group management unit 56 manages the entry of the first communication terminal 30 and the second communication terminal 40 or the users into the virtual room, association between the virtual room and a device, and the like. When authentication by the authentication unit 55 is successful, the communication group management unit 56 registers the user ID, the IP address of the first communication terminal 30, and the IP address of the second communication terminal 40 in a virtual room information storage unit 5002, and associates the image capturing apparatus 10 with the virtual room.

The communication control unit 57 manages the start, establishment, and end of communication with the image capturing apparatus 10 associated with each virtual room. The communication control unit 57 also manages the start, establishment, and end of communication for distributing a wide-view image and audio in accordance with entry of and exit from the virtual room by the first communication terminal 30 and the second communication terminal 40.

The connection management unit 58 manages communication established with the information processing system 50 by the first communication terminal 30, the second communication terminal 40, and the image capturing apparatus 10 in association with the virtual room.

The API management unit 60 manages an API to be used by a platform contractor to provide an image distribution service of a wide-view image. In the use of the API, the platform contractor develops software for calling the API. The software to be developed may operate on a server or may operate on a client device. Any functions of the information processing system 50, such as the image distribution unit 54, the association processing unit 53, and the communication control unit 57, can be provided as an API.

A function added to the information processing system 50 later may be provided as an API. The first communication terminal 30 and the second communication terminal 40 access the information processing system 50 and receive the public settings of the API. As a result, the API management unit 60 can control the API based on the public settings. The API management unit 60 may perform an authentication process for checking whether software operating on a requesting entity that makes a request to call the API is software developed by an authorized platform contractor.

In a specific example of the authentication process, the information processing system 50 receives, from the software operating on the requesting entity, an application ID issued to the software developed by the platform contractor in advance by the API management unit 60. If the API management unit 60 determines that the application ID is stored in advance, the API management unit 60 performs control to permit provision of the API since the software is valid. If the software is not determined to be valid, the API management unit 60 performs control not to permit provision of the API.

The application ID is an example of authentication information for determining validity. The API management unit 60 may use authentication information issued in advance by the API management unit 60 of the information processing system 50 or by an external system to check the validity of the requesting entity. Examples of such authentication information as issued in advance include an access token, a ticket, a security key, a password, and a personal identification number (PIN) code. In the present embodiment, while the use of a function of the information processing system 50 as an API is not described, the same process flow is performed, except that software such as an application developed by a platform contractor uses a function of the information processing system 50 through a determination made by the API management unit 60.

The storing/reading unit 59 stores various types of data in the storage unit 5000 or reads various types of data from the storage unit 5000. The storage unit 5000 includes the image management information storage unit 5001 and the virtual room information storage unit 5002.

### Image Management Information Storage Unit 5001

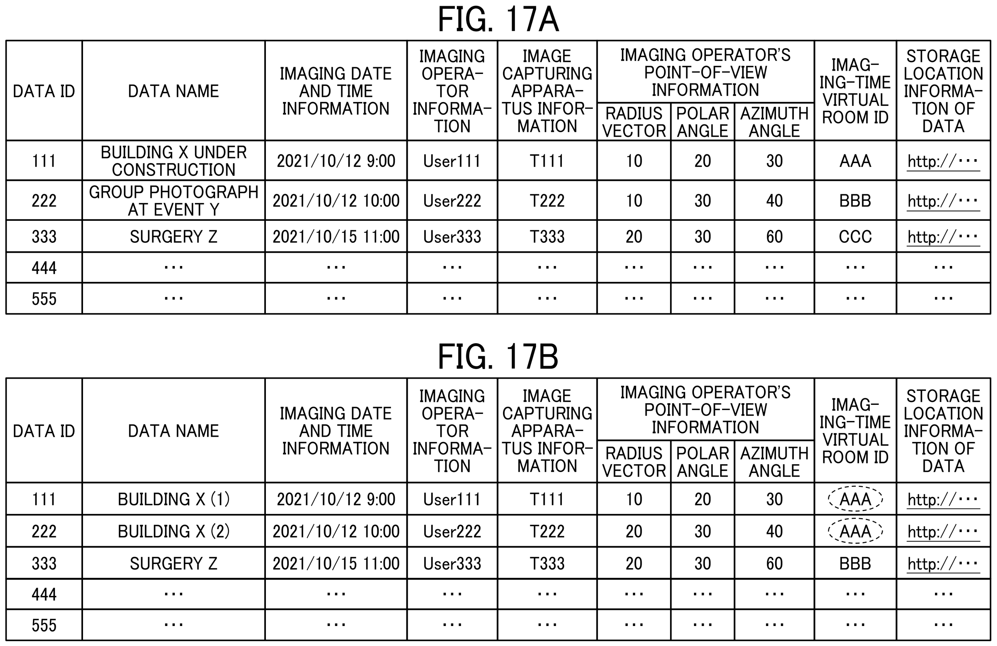

FIGs. 17A and 17B are diagrams illustrating examples of image management information according to an embodiment of the present disclosure. FIG. 17A is an illustration of image management information stored in the image management information storage unit 5001. The image management information storage unit 5001 stores image management information as illustrated in FIG. 17A or 17B. The image management information is information for managing wide-view images captured in response to image capturing requests. In response to receipt of an image capturing request, image management information for one record is generated. The items included in the image management information will be described.

The item "data ID" represents identification information that identifies a wide-view image. The information processing system 50 assigns a number to each data ID. The ID is also referred to as an identifier or identification information. The ID is any one or a combination of two or more of a name, a symbol, a character string, and a numerical value that are used for uniquely identifying a specific object from among a plurality of objects.

The item "data name" represents the name of a wide-view image set by the users of the first communication terminal 30 and the second communication terminal 40. Each data name may be set by a user or automatically.

The item "imaging date and time information" represents information that specifies the imaging date and time of a wide-view image. Examples of the imaging date and time include the date and time when the users input an image capturing request to the first communication terminal 30 and the second communication terminal 40, and the date and time when the image capturing apparatus 10 captured a wide-view image. The imaging date and time information may be a timestamp of a wide-view image.

The item "imaging operator information" represents identification information of the users who have input an image capturing request to the first communication terminal 30 and the second communication terminal 40. The identification information of the users may be user names. Since the users input an image capturing request to the first communication terminal 30 and the second communication terminal 40 after entering a virtual room, users registered in the imaging operator information are identified by authentication for the information processing system 50 or the virtual room. The imaging operator information is transmitted to the information processing system 50 together with an image capturing request.

The item "image capturing apparatus information" represents identification information of the image capturing apparatus 10 that has captured a wide-view image. The image capturing apparatus information is an image capturing apparatus ID. The information processing system 50 assigns a number to each image capturing apparatus ID and shares the image capturing apparatus ID with the image capturing apparatus 10. The image capturing apparatus ID may be information unique to the image capturing apparatus 10, such as a MAC address or a serial number. The image capturing apparatus ID is transmitted to the information processing system 50 together with the associated wide-view image.

The item "imaging operator's predetermined-area information" represents point-of-view information including a radius vector, a polar angle, and an azimuth angle. The point-of-view information indicates the coordinates of the center of the wide-view image that is being displayed on the second communication terminal 40. The point-of-view information is transmitted from the second communication terminal 40 to the first communication terminal 30. The point-of-view information includes information designating the width and height of the display range, in addition to the radius vector, the polar angle, and the azimuth angle. Alternatively, the point-of-view information may include the width and height of the display range, instead of the radius vector, the polar angle, and the azimuth angle.

The item "imaging-time virtual room ID" represents identification information of a virtual room associated with the image capturing apparatus 10.

The item "storage location information of data" represents a URL, a file path, or the like of a location where a wide-view image is stored.

FIG. 17B is also an illustration of image management information. In FIG. 17B, wide-view images having the same imaging-time virtual room ID are stored. The image management information may be classified in units of virtual rooms.

### Virtual Room Information Storage Unit 5002

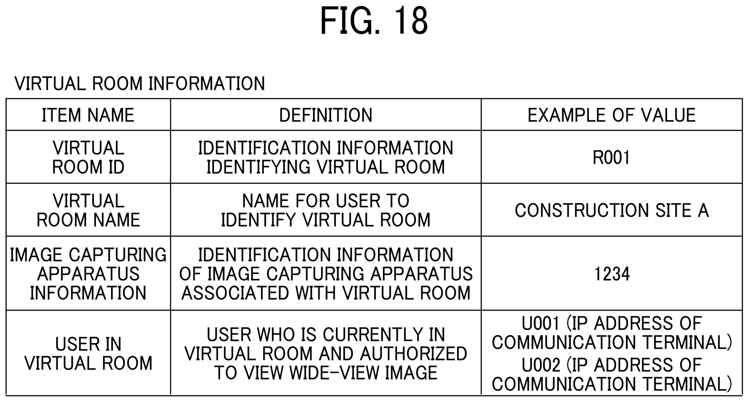

FIG. 18 is a diagram illustrating an example of virtual room information according to an embodiment of the present disclosure. The virtual room information storage unit 5002 stores virtual room information as illustrated in FIG. 18. The virtual room information is information related to a virtual room. The virtual room information is held for each virtual room. The items included in the virtual room information will be described. Each virtual room may be registered in a tenant serving as an entity such as a company or an organization that has a contract with a service provider, such as the information processing system 50, to receive an image distribution service.

The item "virtual room ID" represents identification information that uniquely identifies a virtual room. In the present embodiment, each virtual room may be created by a user as appropriate.

The item "virtual room name" represents a name for a user to identify a virtual room. Each virtual room name may be set by the user as appropriate.

The item "image capturing apparatus information" represents identification information, or an image capturing apparatus ID, of the image capturing apparatus 10 associated with the virtual room.

The item "user in virtual room" represents the user IDs of users who have entered and are currently in the virtual room. The users are authorized to view a wide-view image. The method for entering a virtual room will be described below. The user IDs are associated with the IP address of the first communication terminal 30 and the IP address of the second communication terminal 40, which are operated by the users.

### Entry of Communication Terminal into Virtual Room

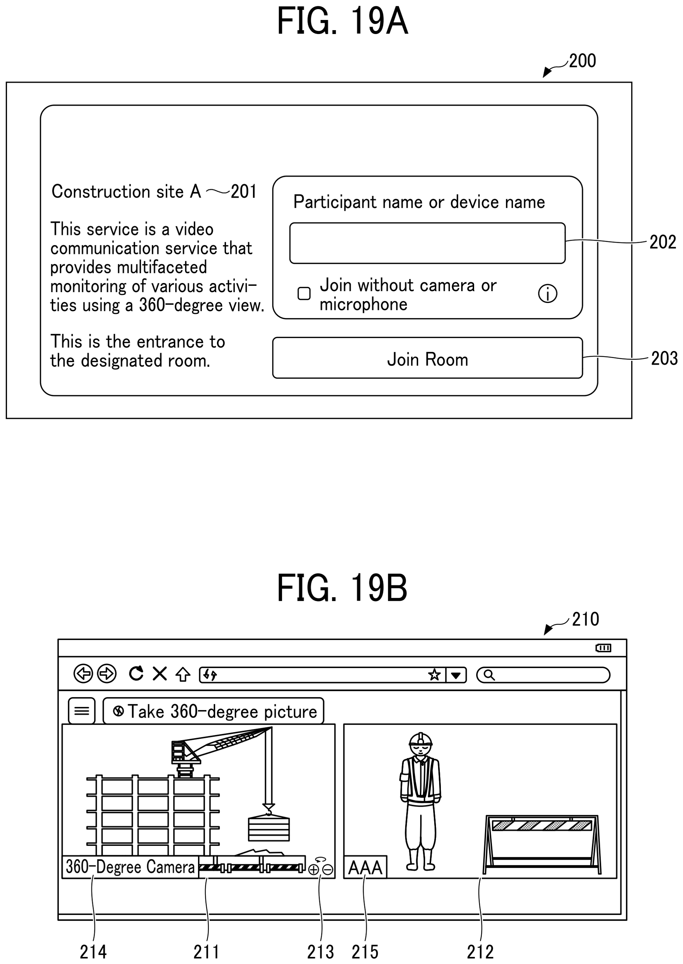

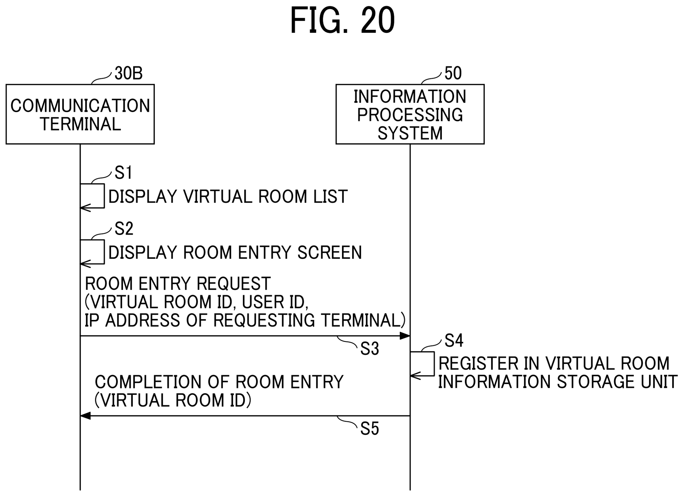

Next, a process in which the user B enters a virtual room will be described with reference to FIGs. 19A, 19B, and 20. FIGs. 19A, 19B, and 20 are diagrams illustrating a process for the communication system 1 according to an embodiment of the present disclosure when the user B enters a virtual room. In the illustrated example, the image capturing apparatus 10 has already been associated with the virtual room, and the communication terminal 40A has transmitted a wide-view image and an image having a normal angle of view to the information processing system 50. In the following description, no distinction is made between the entry of the user B into the virtual room and the entry of the communication terminal 30B, which is operated by the user B, into the virtual room.

FIGs. 19A and 19B illustrate example screens displayed on the communication terminal 30B when the user B is to enter the virtual room. FIG. 19A illustrates an example of a room entry screen 200. Prior to the display of the room entry screen 200, the user B logs in to the information processing system 50. The creator of the virtual room may request the information processing system 50 to issue a URL corresponding to the virtual room, and the URL may be transmitted to the user B via email or any other means. In response to the user B clicking the URL displayed on the communication terminal 30B, the communication terminal 30B displays the room entry screen 200 illustrated in FIG. 19A.

The room entry screen 200 includes a virtual room name 201, a participant name input field 202, and a room entry button 203. The virtual room name 201 is the same as that stored in the virtual room information storage unit 5002. The participant name input field 202 may include a name such as a nickname of the user B. Upon the login of the user B, the user name of the user B is identified. The identified user name may be automatically displayed. The room entry button 203 is a button for the user B to send a request to enter the virtual room.

FIG. 19B illustrates an image viewing screen 210 displayed on the communication terminal 30B in response to the user B entering the virtual room. The image viewing screen 210 illustrated in FIG. 19B indicates that the image capturing apparatus 10 has already started distribution of a wide-view image and that the communication terminal 40A has already started distribution of an image having a normal angle of view. Accordingly, the image viewing screen 210 includes a first image area 211 and a second image area 212. The first image area 211 displays the wide-view image, and the second image area 212 displays the image having a normal angle of view. In one example, images are transmitted from three or more sites. The image viewing screen 210 is divided into a number of portions corresponding to the number of sites from which images are transmitted.

The first image area 211 displays a wide-view image mark 213. The wide-view image mark 213 is set by the screen generation unit 52 of the information processing system 50 based on a determination that the image to be displayed in the first image area 211 is a wide-view image. The determination may be made by the communication terminal 30B, and the communication terminal 30B may display the wide-view image mark 213. The wide-view image mark 213 allows the user B to know that the point of view can be changed. The first image area 211 also displays a device name 214. The device name 214 is set by the user A and is transmitted from the image capturing apparatus 10 together with the wide-view image.

The second image area 212 displays a participant name 215. A participant name that is entered in the participant name input field 202 and that is a participant name of a user who has already entered the virtual room is displayed as the participant name 215.

FIG. 20 is a sequence diagram illustrating a process for entering a virtual room, which is performed in the communication system 1 according to an embodiment of the present disclosure, and illustrates an example in which the user B or the communication terminal 30B enters a virtual room.

S1: First, the user B at the site B performs an operation for displaying a virtual room list screen. In response to the acceptance unit 32 accepting the operation for displaying the virtual room list screen, the display control unit 33 of the communication terminal 30B causes the display 306 to display a selection screen.

S2: In response to the user B selecting a selection button for one of the virtual rooms, the acceptance unit 32 of the communication terminal 30B accepts the selection of the virtual room. The display control unit 33 of the communication terminal 30B causes the display 306 to display the room entry screen 200.

S3: The user B completes the items and then presses the room entry button 203. In response to the acceptance unit 32 accepting the pressing of the room entry button 203, the communication unit 31 of the communication terminal 30B transmits a request to the information processing system 50 to enter the virtual room. The request for entering the virtual room includes a virtual room ID indicating the virtual room selected in step S2, the user ID of the user B, who is a login user, and the IP address of the communication terminal 30B, which is the requesting terminal.

S4: The communication unit 51 of the information processing system 50 receives the request for entering the virtual room. The communication group management unit 56 registers the IP address and the user ID of the login user in the virtual room information identified by the virtual room ID in the virtual room information storage unit 5002.

S5: The communication unit 51 of the information processing system 50 transmits, to the communication terminal 30B, information indicating the completion of the entry into the virtual room. Thus, the communication unit 31 of the communication terminal 30B receives the information indicating the completion of the entry into the virtual room.

### Association of Image Capturing Apparatus with Room

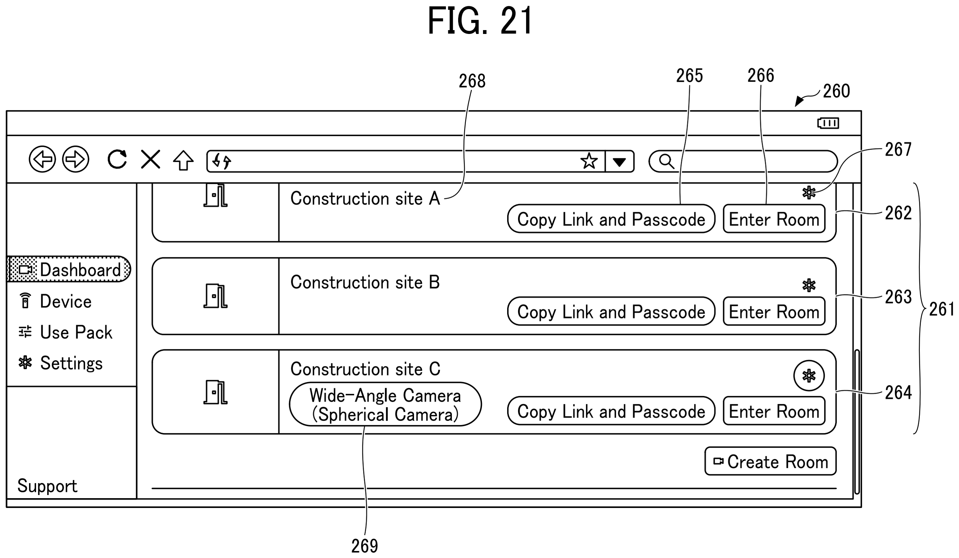

Next, an association of the image capturing apparatus 10 with a virtual room will be described with reference to FIGs. 21 to 25. In an example, the user A at the site A associates the image capturing apparatus 10 with a virtual room. In another example, a system administrator or the like may associate the image capturing apparatus 10 with a virtual room.

FIG. 21 illustrates an example of a virtual room association screen 260 for associating the image capturing apparatus 10 with a virtual room. The same screen configuration may be used for the VR goggles 89 and the smart glasses 88. The virtual room association screen 260 includes a virtual room list 261. The virtual room list 261 displays individual virtual room fields 262 to 264. Each of the individual virtual room fields 262 to 264 includes a link issuance button 265, a room entry button 266, a settings button 267, and a virtual room name 268.

The link issuance button 265 is a button for issuing a link to the corresponding virtual room and a passcode. The room entry button 266 is a button for the user A to enter the corresponding virtual room. The settings button 267 is a button for associating the image capturing apparatus 10 with the corresponding virtual room. The virtual room name 268 is the same as that stored in the virtual room information storage unit 5002. The user A presses the settings button 267. In response to the pressing of the settings button 267, the communication terminal 40A displays a virtual room association screen 270.

If a device has already been associated with the virtual room, a name 269 of the device is displayed in the individual virtual room field (in FIG. 21, the individual virtual room field 264).

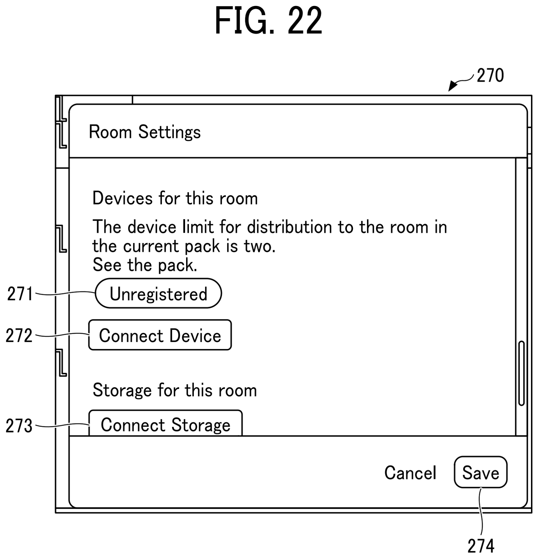

FIG. 22 illustrates an example of the virtual room association screen 270. The virtual room association screen 270 is displayed as a pop-up on the virtual room association screen 260. In one example, the screen transition from the virtual room association screen 260 to the virtual room association screen 270 is not made through the information processing system 50. In another example, the screen transition from the virtual room association screen 260 to the virtual room association screen 270 may be made through the information processing system 50.

The virtual room association screen 270 includes a name 271 of the image capturing apparatus 10 that has already been associated with the virtual room, a connection button 272, a storage button 273, and a "Save" button 274. In the illustrated example, the name 271 is set as unregistered since the name 271 of the image capturing apparatus 10 has not yet been registered. The connection button 272 is a button for displaying a list of devices registered in the virtual room. The storage button 273 is a button for displaying a list of storages 90 to store a wide-view image captured by the image capturing apparatus 10 associated with the virtual room. In response to the pressing of the connection button 272, the communication terminal 40A displays a virtual room association screen 280.

The communication terminal 40A transmits a virtual room ID to the information processing system 50 and acquires the name of a device registered in the virtual room indicated by the virtual room ID and the name of a device associated with the virtual room. The name of a device includes, for example, the ID of the device.

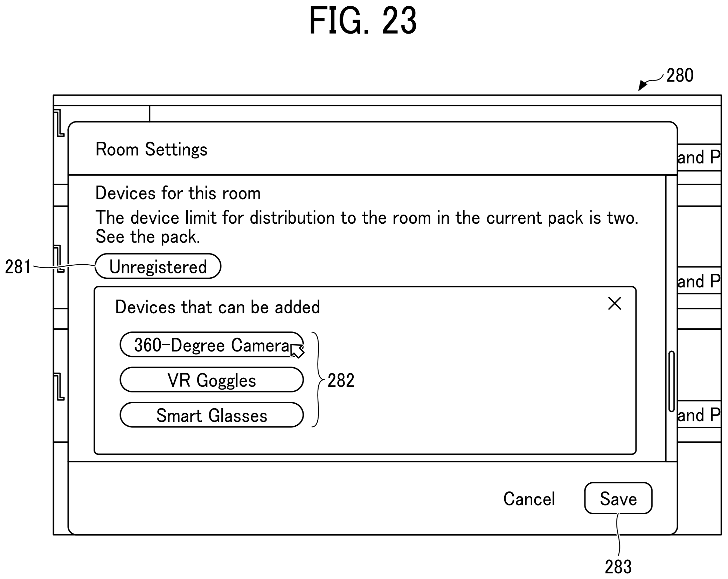

FIG. 23 illustrates an example of the virtual room association screen 280. The virtual room association screen 280 includes a name 281 of the image capturing apparatus 10 that has already been associated with the virtual room, a list of devices 282 that can be added, and a "Save" button 283. The user A selects a device to be associated with the virtual room from the list of devices 282 that can be added and then presses the "Save" button 283. Accordingly, the selected device is associated with the virtual room. At this time, an image capturing apparatus ID is registered in the virtual room information storage unit 5002.

### Wide-View Image Transmission Start Process for Image Capturing Apparatus

In the way described above, a device such as the image capturing apparatus 10 is associated with the virtual room. The user A operates the device to start transmitting an image.

For the VR goggles 89 and the smart glasses 88, the user A operates the device main body to turn on or off the transmission of an image. This is because no application dedicated to the communication system 1 is currently operating on the VR goggles 89 or the smart glasses 88. If an application dedicated to the communication system 1 operates on the VR goggles 89 and the smart glasses 88, the user A can also remotely turn on or off the transmission of an image.

For the image capturing apparatus 10, when the application is enabled, the user A can turn on or off the transmission of a wide-view image from the menu of the application after entering the virtual room.

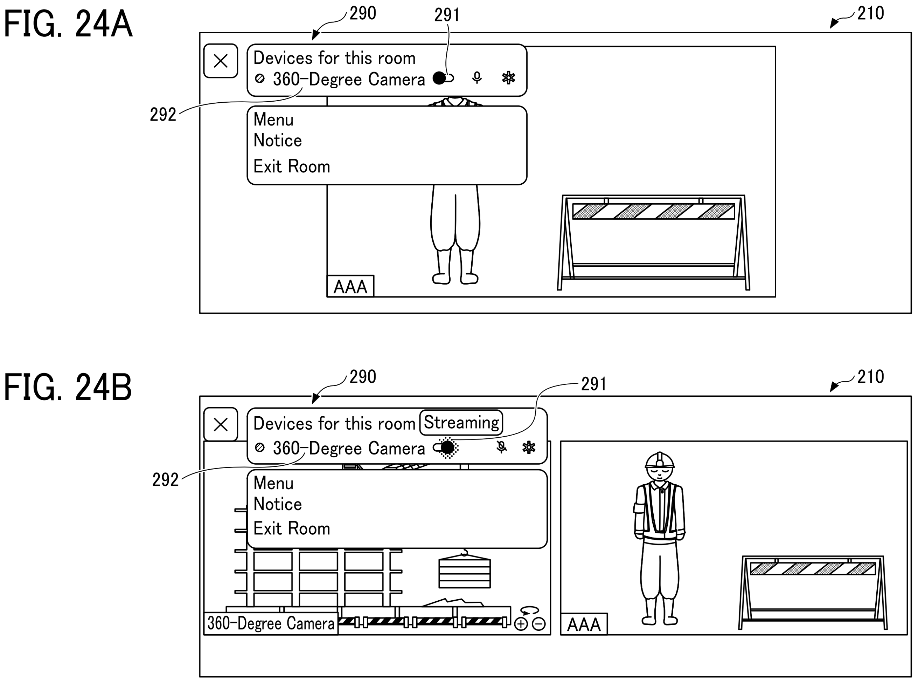

FIGs. 24A and 24B illustrate examples of a wide-view image transmission start/stop dialog 290 displayed on the communication terminal 40A. The wide-view image transmission start/stop dialog 290 is displayed as a pop-up on the image viewing screen 210. In the illustrated example, the user A has operated the communication terminal 40A and entered a virtual room associated with the image capturing apparatus 10. The wide-view image transmission start/stop dialog 290 displays a name 292 of the image capturing apparatus 10 associated with the virtual room. A toggle button 291 is displayed near the name 292. In one example, the user A operates the toggle button 291 to turn on or off the transmission of the wide-view image captured by the image capturing apparatus 10.

Turning on or off the transmission of the wide-view image using a toggle button is merely an example, and any other method based on user operation input may be used. For example, a radio button or a predetermined icon may be selected, or a menu operation may be performed. Alternatively, the transmission of the wide-view image may be started automatically, without using a user operation, after the image capturing apparatus 10 enters the room. In another example, a predetermined condition such as the date and time, the number of users who have entered the room, or the participation of a specific user is determined in advance, and the transmission of the wide-view image is started based on a determination that the predetermined condition is satisfied.

The communication terminal 40A transmits the state of the toggle button 291 to the information processing system 50. The information processing system 50 transmits a transmission start request or a transmission stop request corresponding to the state of the toggle button 291 to the image capturing apparatus 10.

FIG. 24A illustrates an off state of the toggle button 291. In FIG. 24A, thus, the wide-view image is not displayed. By contrast, the image having a normal angle of view captured by the image capturing apparatus 10A of the communication terminal 40A is displayed in the image viewing screen 210 in FIG. 24A since the image having a normal angle of view has already been shared at the time of entry of the communication terminal 40A into the virtual room.

FIG. 24B illustrates an on state of the toggle button 291. In response to turning on of the toggle button 291, the information processing system 50 transmits a transmission start request to the image capturing apparatus 10. Accordingly, the image capturing apparatus 10 starts transmitting the wide-view image. Since two images are shared in one virtual room, the image viewing screen 210 is divided into two areas.

### Procedure for Registering Image Capturing Apparatus in Virtual Room

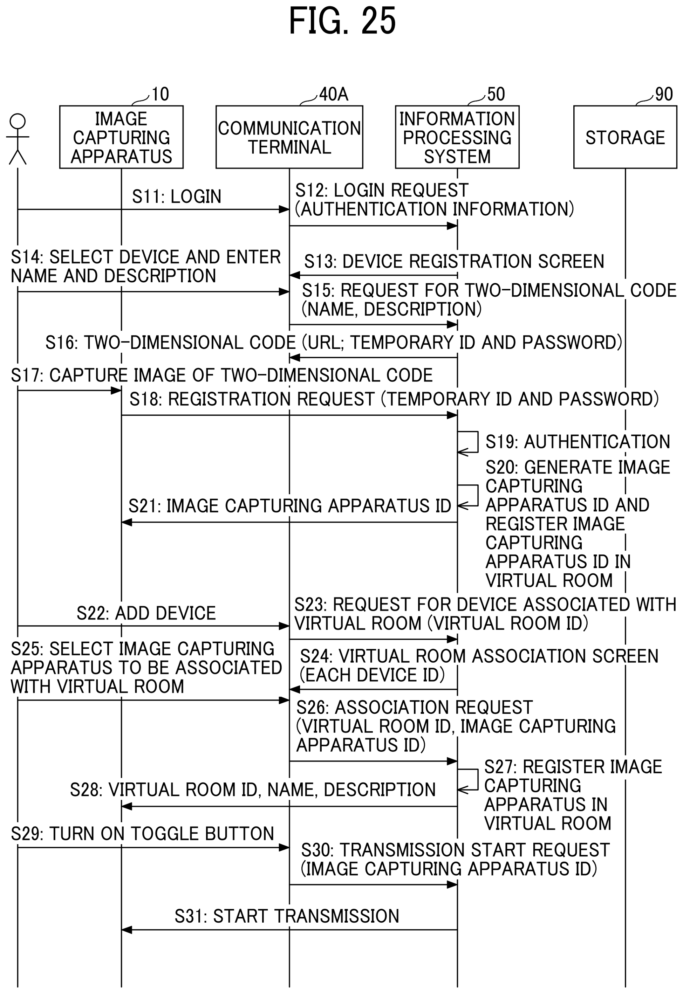

Next, a procedure for registering the image capturing apparatus 10 in the virtual room illustrated in the screen transitions will be described with reference to FIG. 25. FIG. 25 is a sequence diagram illustrating an example of a procedure performed in the communication system 1 according to an embodiment of the present disclosure when the user A registers the image capturing apparatus 10 in a virtual room using the communication terminal 40A (the second communication terminal 40).

S11: First, the user A connects the communication terminal 40A to the information processing system 50 and enters authentication information to make a login request to the virtual room to which the user A belongs. The authentication information includes, for example, a user ID and a password. The acceptance unit 42 of the communication terminal 40A accepts the operation.

S12: The communication unit 41 of the communication terminal 40A designates the authentication information and transmits the login request to the information processing system 50. In the information processing system 50, the communication unit 51 receives the login request, and the authentication unit 55 performs authentication. It is assumed that the authentication has been successful.

S13: In the information processing system 50, the screen generation unit 52 generates a device registration screen in response to the user operation, and the communication unit 51 transmits screen information of the device registration screen to the communication terminal 40A.

S14: In the communication terminal 40A, the communication unit 41 receives the screen information of the device registration screen, and the display control unit 43 displays the device registration screen. The user A selects the image capturing apparatus 10 as a device type and enters the name and description of the image capturing apparatus 10. The acceptance unit 42 receives the entered information.

S15: The communication unit 41 of the communication terminal 40A designates the name and description entered by the user A and transmits a request for a two-dimensional code to the information processing system 50.

S16: The communication unit 51 of the information processing system 50 receives the request for a two-dimensional code. The communication group management unit 56 generates a URL indicating a connection destination for registration in association with the name and the description, and generates a two-dimensional code including the URL, a temporary ID, and a password. The communication unit 51 of the information processing system 50 transmits the two-dimensional code to the communication terminal 40A. In the communication terminal 40A, the communication unit 41 receives the two-dimensional code, and the display control unit 43 displays the two-dimensional code.

S17: The user A operates the image capturing apparatus 10 to be associated with the virtual room to capture an image of the two-dimensional code. The acceptance unit 12 of the image capturing apparatus 10 accepts the operation.

S18: In the image capturing apparatus 10, the imaging processing unit 13 performs an operation for capturing an image including the two-dimensional code to generate image data, and the analysis unit 14 analyzes the image data to extract the URL, the temporary ID, and the password. Accordingly, the registration request unit 15 connects to the URL via the connection unit 16, designates the temporary ID and the password, and transmits a request for registering the image capturing apparatus 10 to the information processing system 50.

S19: In the information processing system 50, the communication unit 51 receives the temporary ID and the password, and the authentication unit 55 determines whether the received temporary ID and password match the temporary ID and password associated with the connected URL. It is assumed that a match has been found for the temporary ID and the password.

S20: Since a request for registering the image capturing apparatus 10 has been made, the communication group management unit 56 of the information processing system 50 generates an image capturing apparatus ID and registers the image capturing apparatus ID in the virtual room to which the user A has logged in. The image capturing apparatus ID is associated with a name and a description.

S21: The communication unit 51 of the information processing system 50 transmits the image capturing apparatus ID to the image capturing apparatus 10. The connection unit 16 of the image capturing apparatus 10 receives the image capturing apparatus ID and stores the image capturing apparatus ID in the storage unit 1000.

S22: The user A displays the virtual room association screen 270 on the communication terminal 40A and presses an "Add Device" button. The acceptance unit 42 of the communication terminal 40A accepts the pressing of the "Add Device" button.

S23: The communication unit 41 of the communication terminal 40A transmits a request for devices associated with the virtual room ID to the information processing system 50.

S24: In the information processing system 50, the communication unit 51 receives the request for the devices associated with the virtual room ID, and the screen generation unit 52 generates the virtual room association screen 280 including the device IDs of the devices associated with the virtual room ID. The communication unit 51 of the information processing system 50 transmits screen information of the virtual room association screen 280 to the communication terminal 40A.

S25: In the communication terminal 40A, the communication unit 41 receives the screen information of the virtual room association screen 280, and the display control unit 43 displays the virtual room association screen 280. The user A selects the image capturing apparatus 10 to be associated with the virtual room. The acceptance unit 42 of the communication terminal 40A accepts the selection of the image capturing apparatus 10, and an image capturing apparatus ID is identified.

S26: The communication unit 41 of the communication terminal 40A designates the virtual room ID and the image capturing apparatus ID, and transmits an association request to the information processing system 50.

S27: In the information processing system 50, the communication unit 51 receives the association request, and the communication group management unit 56 registers the image capturing apparatus 10 in the virtual room. That is, the communication group management unit 56 registers the image capturing apparatus ID in the virtual room information storage unit 5002.

S28: Since the image capturing apparatus ID is associated with the virtual room, the communication unit 51 of the information processing system 50 transmits the virtual room ID, the name, and the description to the image capturing apparatus 10. The information processing system 50 may transmit the virtual room ID, the name, and the description to the image capturing apparatus 10 by using a push notification or by using polling, which is performed by the image capturing apparatus 10. The connection unit 16 of the image capturing apparatus 10 receives the virtual room ID, the name, and the description and stores the virtual room ID, the name, and the description in the storage unit 1000. Accordingly, the image capturing apparatus 10 can attach, for example, the image capturing apparatus ID, the virtual room ID, the name, and the description to a wide-view image to be transmitted.

S29: The communication terminal 40A is notified of the completion of the association, and, accordingly, the user A turns on the toggle button 291 for the image capturing apparatus 10 associated with the virtual room on the image viewing screen 210. The acceptance unit 42 of the communication terminal 40A accepts the turn-on operation.

S30: The communication unit 41 of the communication terminal 40A designates the image capturing apparatus ID and transmits, to the information processing system 50, a request for starting transmission of the wide-view image. The user A may directly operate a button of the image capturing apparatus 10 to start transmission of the wide-view image. In response to an operation performed by the user A, the communication unit 41 of the communication terminal 40A may transmit a transmission stop request to the information processing system 50.

S31: The communication unit 51 of the information processing system 50 receives the transmission start request and requests the image capturing apparatus 10 identified by the image capturing apparatus ID to start transmission. The information processing system 50 may use a push notification or use polling, which is performed by the image capturing apparatus 10. In the image capturing apparatus 10, the connection unit 16 receives the transmission start request, and the imaging processing unit 13 starts capturing a wide-view image. The image transmission control unit 18 repeatedly transmits the wide-view image at a determined frame rate (expressed in FPS) or a frame rate (expressed in FPS) corresponding to a bandwidth via the connection unit 16. As a result, the communication terminal 40A that has entered the virtual room can display the state of the site A on the image viewing screen 210 in real time.

### Distribution of Wide-View Image and Others

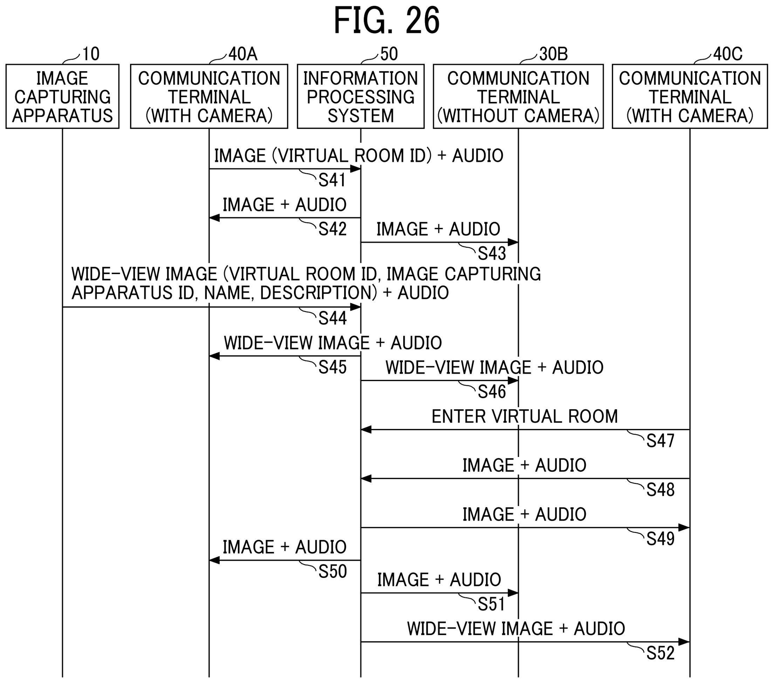

A process for sharing a wide-view image and an image having a normal angle of view will be described with reference to FIG. 26. FIG. 26 is a sequence diagram illustrating an example of a process for sharing a wide-view image. In FIG. 26, the communication terminal 40A at the site A and the communication terminal 30B at the site B have already entered the virtual room. The communication terminal 40A includes the image capturing apparatus 10A having a normal angle of view, and an image captured by the image capturing apparatus 10A is shared with the communication terminal 30B. An image or the like captured by the smart glasses 88 associated with the virtual room, instead of the image capturing apparatus 10A of the communication terminal 40A, may be shared.

S41: In the communication terminal 40A, the imaging unit 44 repeatedly captures an image to obtain captured images, and the communication unit 41 designates the virtual room ID of the virtual room that the communication terminal 40A is in and repeatedly transmits the images and audio to the information processing system 50.

S42 and S43: In the information processing system 50, in response to the communication unit 51 receiving the images and the audio, the image distribution unit 54 acquires the IP addresses of the communication terminals 30B and 40A, which are in the virtual room, from the virtual room information storage unit 5002, and transmits the images and the audio via the communication unit 51. In FIG. 26, an image having a normal angle of view is received by the communication unit 41 of the communication terminal 40A from the information processing system 50 and is displayed. In another example, an image having a normal angle of view is not received from the information processing system 50, but an image having a normal angle of view is captured by the imaging unit 44 and is displayed.

S44: In the image capturing apparatus 10, in response to a transmission start request made by turning on the toggle button 291, the imaging processing unit 13 repeatedly captures a wide-view image to obtain captured wide-view images, and the image transmission control unit 18 designates the virtual room ID, the image capturing apparatus ID, the name, and the description and repeatedly transmits the wide-view images and audio to the information processing system 50 via the connection unit 16.

S45 and S46: In the information processing system 50, in response to the communication unit 51 receiving the wide-view images and the audio, the image distribution unit 54 acquires the IP addresses of the communication terminals 30B and 40A, which are in the virtual room, from the virtual room information storage unit 5002, and transmits the wide-view images and the audio via the communication unit 51.

S47: The communication terminal 40C including the image capturing apparatus 10C, which is located at the site C, newly enters the virtual room.

S48: The communication unit 41 of the communication terminal 40C transmits an image having a normal angle of view and audio to the information processing system 50.

S49 to S51: In the information processing system 50, the communication unit 51 receives the image having a normal angle of view and the audio from the communication terminal 40C, and the image distribution unit 54 acquires the IP addresses of the communication terminals 30B, 40A, and 40C, which are in the virtual room, from the virtual room information storage unit 5002, and transmits the image having a normal angle of view and the audio.

S52: The communication unit 51 of the information processing system 50 also transmits the wide-view images and the audio to the communication terminal 40C, which is in the same virtual room.

As described above, the users A, B, and C, who are in the same virtual room, can share the wide-view images captured by the image capturing apparatus 10 associated with the virtual room. The order of transmission of the images illustrated in FIG. 26 is an example. In another example, the wide-view images may be shared first, or the images having a normal angle of view may be shared first.

A supplementary description will be given of the smart glasses 88 and the VR goggles 89. The smart glasses 88 include a camera having a normal angle of view and a display function. The camera of the smart glasses 88 captures an image having a normal angle of view, and the captured image having a normal angle of view is distributed in a manner similar to that for the image capturing apparatuses 10A and 10C. The display function of the smart glasses 88 is implemented by a flat screen, like that of an ordinary display. Thus, part of a wide-view image is displayed from a point of view designated by the user. The VR goggles 89 have a display function. In one example, the VR goggles 89 may also include a camera having a normal angle of view.

The display function of the VR goggles 89 projects a wide-view image with a point of view determined by the orientation of the head of the user wearing the VR goggles 89. Thus, part of the wide-view image is displayed from a point of view corresponding to the orientation of the head of the user. While viewing a wide-view image with the smart glasses 88 or the VR goggles 89, the user can transmit, to the information processing system 50, an image capturing request that designates point-of-view information of the wide-view image being viewed.

### Communication Method according to Comparative Example

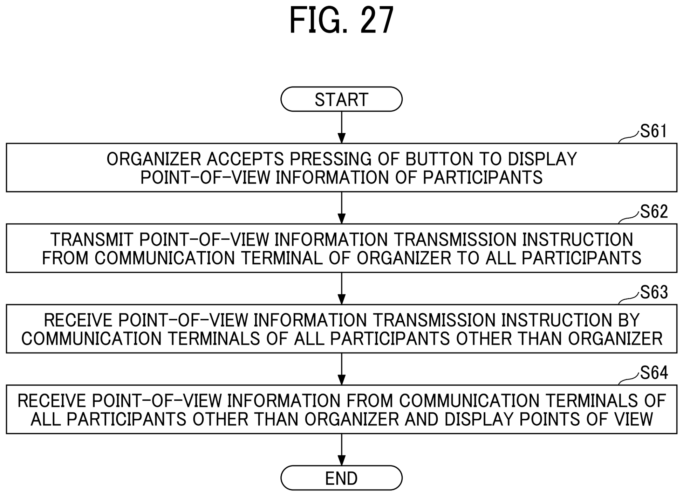

Next, a communication method according to a comparative example will be described with reference to FIG. 27. FIG. 27 is a flowchart illustrating the communication method according to the comparative example. The communication method according to the comparative example will be described as being executed with a configuration similar to that of the communication system 1 according to the present embodiment. In the comparative example, a communication terminal of an organizer receives point-of-view information from communication terminals of participants and superimposes points of view on a wide-view image.

S61: First, the communication terminal of the organizer accepts pressing of a button displayed on a screen to display point-of-view information of the participants.

S62 and S63: The communication terminal of the organizer transmits a point-of-view information transmission instruction to communication terminals of all the participants, and the communication terminals of all the participants other than the organizer receive the point-of-view information transmission instruction from the communication terminal of the organizer.

S64: The communication terminal of the organizer superimposes, on the wide-view image, points of view based on point-of-view information received from the communication terminals of all the participants.

In the communication method according to the comparative example, as the number of participants in remote communication increases, the amount of point-of-view information to be transmitted increases. Accordingly, the transmission and reception of such an increased amount of point-of-view information leads to an increase in network load for communication of the point-of-view information. This may result in a reduction in the quality of video and audio in the remote communication.

In addition, on a communication terminal that has received the point-of-view information, a large number of points of view are superimposed on a wide-view image. Thus, such points of view may occlude a large number of areas of the video, thus potentially reducing the visibility of the video to the user. Therefore, it is preferable to establish a connection policy, based on an allowable load determined from expected load conditions such as the amount of point-of-view information to be transmitted, received, and displayed and a communication bandwidth of a network, and to adjust the amount of point-of-view information to be collected based on the established connection policy. Accordingly, the following describes a communication method corresponding to a processing flow executed by the communication system 1 according to the present embodiment.

### Processing flow in Present Embodiment

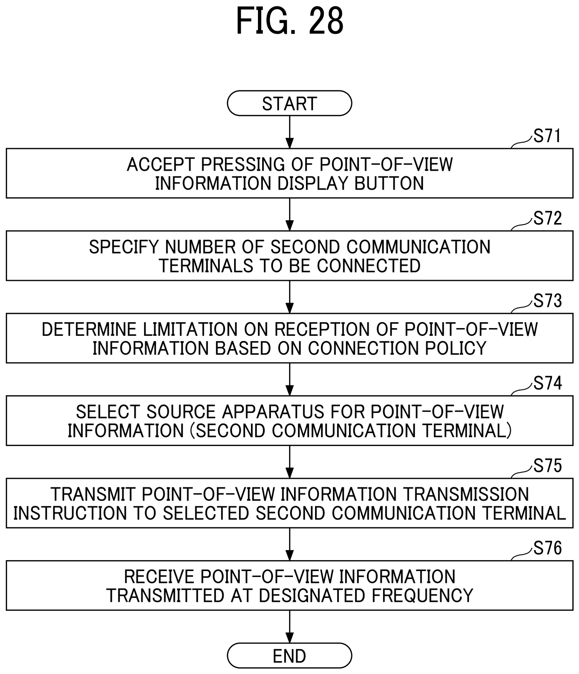

FIG. 28 is a flowchart illustrating a processing flow executed by the communication system 1 according to an embodiment of the present disclosure. In the following description, in the configuration of the communication system 1 illustrated in FIG. 2, the user B at the site B, who is the organizer, uses the communication terminal 30B, which is a first communication terminal 30, to receive point-of-view information from the communication terminals 40A and 40C, which are second communication terminals 40, used by the users A and C at the sites A and C, which are participants, respectively.

S71: First, the first communication terminal 30 accepts pressing of a point-of-view information display button as a predetermined operation by the user B to display point-of-view information.

S72: The first communication terminal 30 specifies the number of second communication terminals 40 to be connected. The number of second communication terminals 40 to be connected is specified based on, for example, but not limited to, address information such as the IP address of a second communication terminal 40 indicating a destination for captured image data in the predetermined-area management information (see, for example, FIG. 16).

S73: The first communication terminal 30 determines a limitation on the reception of point-of-view information, based on a connection policy including settings related to the amount of traffic. The connection policy includes various settings such as the amount of traffic on the network N, the number of points of view to be superimposed on a wide-view image, and a connection time. The connection policy is set in accordance with an environment such as device information and communication states of the first communication terminal 30 and the second communication terminals 40. Preferably, the connection policy is set such that the quality of video and audio is ensured in remote communication and superimposition of points of view does not impede viewing the video. A plurality of connection policies may be set.

S74: The first communication terminal 30 selects second communication terminals 40 that are source apparatuses from which point-of-view information is received, based on, for example, the determined limitation on the reception of point-of-view information and predetermined priority. The predetermined priority is determined based on, for example, but not limited to, user attributes of the second communication terminals 40 and the sites at which the second communication terminals 40 are installed.

S75 and S76: The first communication terminal 30 transmits a point-of-view information transmission instruction to the selected second communication terminals 40 and receives from the selected second communication terminals 40 point-of-view information that is transmitted at a designated frequency. Each of the second communication terminals 40 limits transmission of point-of-view information to the first communication terminal 30, based on whether a point-of-view information transmission instruction has been received. On the first communication terminal 30, respective points of view of the selected second communication terminals 40 are superimposed on the wide-view image, based on the received point-of-view information. Each of the second communication terminals 40 may limit transmission of point-of-view information to the first communication terminal 30, instead of based on whether a point-of-view information transmission instruction has been received, by the second communication terminal 40 determining whether transmission is possible based on the connection policy.

The communication method according to an embodiment of the present disclosure is implemented by the steps described above. However, the communication method according to an embodiment of the present disclosure may include other steps as appropriate in accordance with measurement conditions, a measurement environment, and the like. The same applies to respective steps according to modifications described below.

### Modification 1

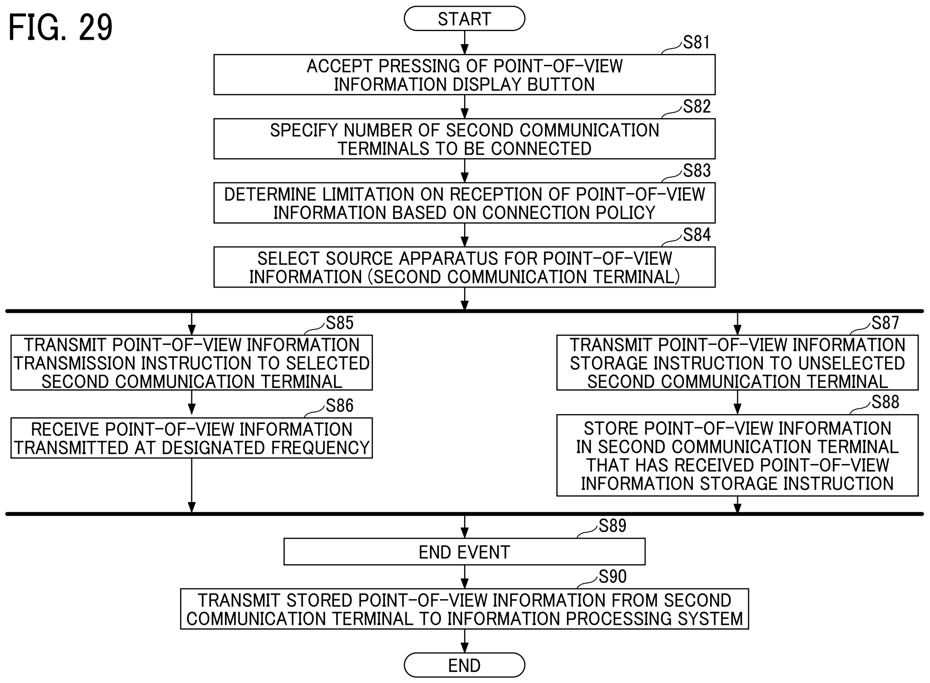

Next, a communication method according to Modification 1 will be described. FIG. 29 is a flowchart illustrating a processing flow executed by the communication system 1 according to Modification 1 of an embodiment of the present disclosure.

In Modification 1, the communication unit 31 of the first communication terminal 30 transmits a point-of-view information storage instruction to a second communication terminal 40 that is not selected as a second communication terminal 40 that is a source apparatus from which point-of-view information is received. In response to receipt of the point-of-view information storage instruction, the second communication terminal 40 stores point-of-view information and transmits the stored point-of-view information to the information processing system 50 after an end of an event related to the wide-view image. The stored point-of-view information may be transmitted to the first communication terminal 30 and other apparatuses.

In the illustrated processing flow, the processing of steps S85 and S86 is processing related to second communication terminals 40 selected as second communication terminals 40 that are source apparatuses from which point-of-view information is received by the first communication terminal 30. The processing of steps S87 and S88 is processing related to a second communication terminal 40 not selected as a second communication terminal 40 that is a source apparatus from which point-of-view information is received by the first communication terminal 30. The processing of steps S81 to S86 in FIG. 29 is similar to the processing of steps S71 to S76 in FIG. 28, and a description thereof will be omitted.

S87 and S88: The first communication terminal 30 transmits a point-of-view information storage instruction to the second communication terminal 40 not selected as a second communication terminal 40 that is a source apparatus from which point-of-view information is received, and, in response to receipt of the point-of-view information storage instruction, the second communication terminal 40 stores point-of-view information in memory thereof.

S89 and S90: When an event related to the wide-view image ends in the remote communication such as a conference or a tour, the second communication terminal 40 transmits the stored point-of-view information to the information processing system 50. The second communication terminal 40 may limit transmission of point-of-view information to the first communication terminal 30, instead of based on whether a point-of-view information storage instruction has been received, by the second communication terminal 40 determining whether to limit the transmission of point-of-view information based on the connection policy.

The information processing system 50 or the like receives the stored point-of-view information from the unselected second communication terminal 40 after the end of the event, and stores a wide-view image on which a point of view is superimposed. With the configuration described above, the communication system 1 according to Modification 1 makes it possible to reduce the amount of traffic for transmission of point-of- view information and make an image with superimposed point-of-view information of all the second communication terminals 40 viewable after the end of the event.

### Modification 2

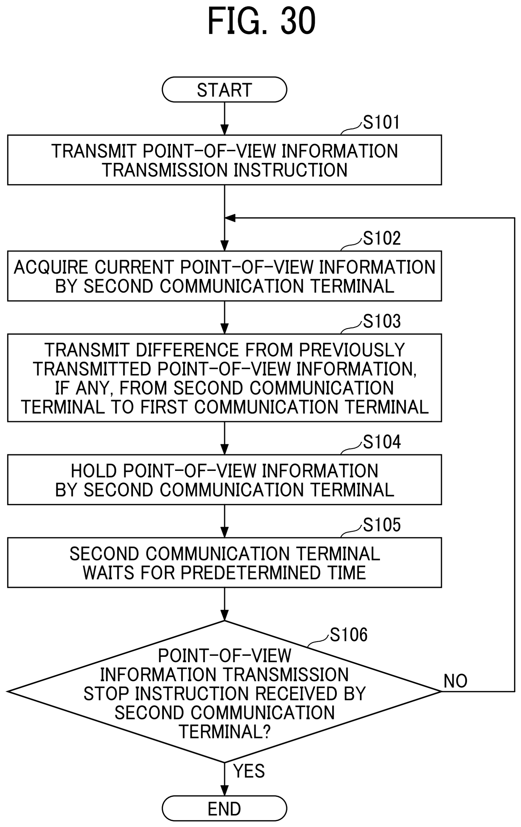

Next, a communication method according to Modification 2 will be described. FIG. 30 is a flowchart illustrating a processing flow executed by the communication system 1 according to Modification 2 of an embodiment of the present disclosure.

In Modification 2, each of the second communication terminals 40 that have received a point-of-view information transmission instruction from the first communication terminal 30 transmits information related to a difference from previously transmitted point-of-view information to the first communication terminal 30. The information related to a difference from previously transmitted point-of-view information is information indicating a parameter that has changed among parameters included in the point-of-view information. Examples of such parameters include a radius vector, a polar angle, and an azimuth angle. The first communication terminal 30 may or may not limit the number of second communication terminals 40 that are source apparatuses from which information related to a difference from previous point-of-view information is received.

S101: First, the first communication terminal 30 transmits a point-of-view information transmission instruction to a second communication terminal 40.

S102: In response to receipt of the point-of-view information transmission instruction from the first communication terminal 30, the second communication terminal 40 acquires current point-of-view information. The current point-of-view information includes the current values of the parameters such as the radius vector, the polar angle, and the azimuth angle.

S103, S104, and S105: The second communication terminal 40 transmits information related to a difference from previously transmitted point-of-view information, if any, to the first communication terminal 30, holds the current point-of-view information, and waits for a predetermined time until the next point-of-view information transmission instruction is received. The predetermined time is, for example, but not limited to, a time until the next point-of-view information transmission instruction is received from the first communication terminal 30.

S106: If the second communication terminal 40 receives an instruction from the first communication terminal 30 to end transmission of point-of-view information due to an end of the event or the like (YES in step S106), the process ends. If the second communication terminal 40 does not receive an instruction to end transmission of point-of-view information for a predetermined time (NO in step S106), the process returns to step S102. The second communication terminal 40 may transmit a difference from previously transmitted point-of-view information to the first communication terminal 30, instead of based on whether a point-of-view information transmission instruction has been received, by the second communication terminal 40 determining whether to transmit such a difference based on the connection policy.

In the communication system 1 according to Modification 2, each of the second communication terminals 40 that have received a point-of-view information transmission instruction from the first communication terminal 30 transmits information related to a difference from previously transmitted point-of-view information to the first communication terminal 30. The communication system 1 makes it possible to reduce the amount of traffic for transmission of point-of-view information.

### Modification 3

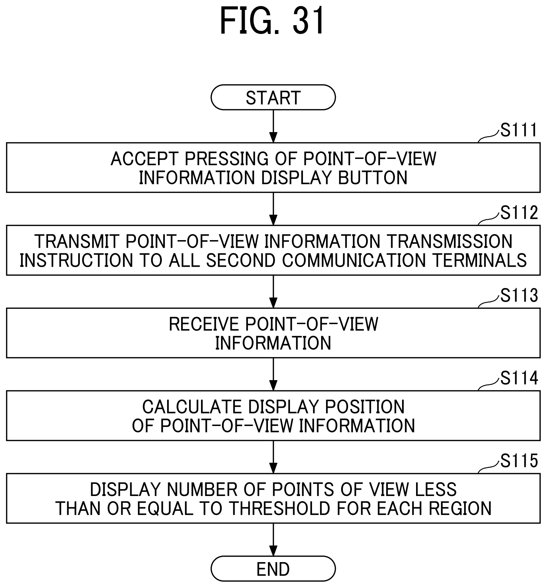

Next, a communication method according to Modification 3 will be described. FIG. 31 is a flowchart illustrating a processing flow executed by the communication system 1 according to Modification 3 of an embodiment of the present disclosure.

In Modification 3, a wide-view image displayed by the display control unit 33 of the first communication terminal 30 includes a predetermined number of regions, for example, four regions, and the limitation unit 37 sets a threshold for the number of points of view to be superimposed in each region of the wide-view image to perform limitation.

The number of regions provided in the wide-view image is not limited to four and may be any number. The regions may or may not have the same area. For example, a region corresponding to a human face may be narrower than the other regions, and thresholds for the number of points of view to be superimposed may differ for the respective regions.

S111: First, the first communication terminal 30 accepts pressing of a point-of-view information display button, which is a predetermined operation by the user B at the site B to display point-of-view information.

S112 and S113: The first communication terminal 30 transmits a point-of-view information transmission instruction to all the second communication terminals 40 and receives from the second communication terminals 40 point-of-view information that is transmitted at a designated frequency.

S114: The first communication terminal 30 calculates positions of points of view to be superimposed on the wide-view image, based on the received point-of-view information. The positions of points of view are values indicated by, for example, but not limited to, coordinates in the wide-view image.

S115: The limitation unit 37 of the first communication terminal 30 selects and displays points of view to be superimposed such that the number of points of view to be superimposed in each region of the wide-view image is less than or equal to a threshold. The points of view to be superimposed are selected based on, for example, predetermined priority. The predetermined priority is determined based on, for example, user attributes of the second communication terminals 40 and the sites at which the second communication terminals 40 are installed.

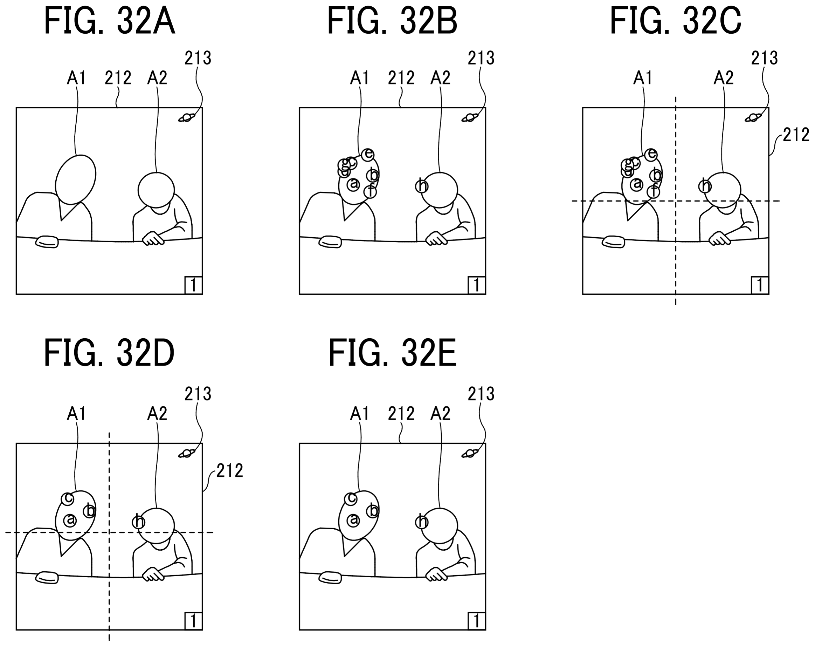

FIGs. 32A, 32B, 32C, 32D, and 32E are diagrams illustrating an example of points of view superimposed on the wide-view image in Modification 3 of an embodiment of the present disclosure. FIGs. 32A, 32B, 32C, 32D, and 32E illustrate examples of content displayed in the second image area 212 on the first communication terminal 30 at the site B. The second image area 212 is illustrated in FIG. 19B. Two users A1 and A2 at the site A and the wide-view image mark 213 are displayed.

In FIGs. 32A, 32B, 32C, 32D, and 32E, points of view a to h are based on point-of-view information received from the second communication terminals 40 at the respective sites, and broken lines for separating the regions are not actually displayed in the second image area 212. The number of divided regions is not limited to four, and the wide-view image displayed on the first communication terminal 30 is divided into any number of regions. While it is assumed that the threshold for the number of points of view to be superimposed in each region is three, the threshold is not limited thereto and may be any number.

FIG. 32A illustrates a state in which the two users A1 and A2 at the site A and the wide-view image mark 213 are displayed and no points of view are superimposed. As illustrated in FIG. 32B, the first communication terminal 30 receives point-of-view information from the second communication terminals 40 at eight sites and points of view are superimposed.

Characters, symbols, and the like for identifying the respective sites, such as indicators "a", "b", "c", "d", "e", "f", "g", and "h" in FIG. 32B, may be displayed. Characters, symbols, and the like for identifying the respective sites may be displayed overlaid on the points of view as illustrated, or may be displayed in the vicinity of the points of view. As illustrated, the points of view are displayed in circular shapes, but may be displayed in any shapes such as squares or may be displayed in a manner such as blinking.

As illustrated in FIG. 32C, the display control unit 33 of the first communication terminal 30 divides the wide-view image into four regions. As illustrated, a region including a face portion of the user A1 includes seven points of view. As a result, for example, the facial expression of the user A1 is difficult to read. Since the threshold for the number of points of view to be superimposed is three, the limitation unit 37 selects three points of view to be superimposed, based on, for example, predetermined priority.

As illustrated in FIG. 32D, the points of view "a", "b", and "c" are selected and displayed in the region representing the face portion of the user A1, and the points of view "d", "e", "f", and "g" are not superimposed. At this time, point-of-view information on which the points of view that are not superimposed are based may be transmitted to and stored in the information processing system 50. In a region representing a face portion of the user A2, one point of view, namely, the point of view "h", which is less than or equal to the threshold, or three, is displayed as it is. An actual image displayed on the first communication terminal 30 does not display the broken lines, as illustrated in FIG. 32E.

In the communication system 1 according to Modification 3, a wide-view image displayed by the display control unit 33 of the first communication terminal 30 is divided into a predetermined number of regions, and the number of points of view to be superimposed is limited for each of the regions. This configuration allows a user to set a portion to be focused on, as desired, and enables limiting the decrease in visibility resulting from the display of points of view.

### Other Embodiments

### Application Example of Communication System in Telemedicine

The communication system 1 according to the present embodiment has been described by way of example in a scenario such as a construction site tour. The following describes another application example of the communication system 1 according to the present embodiment.

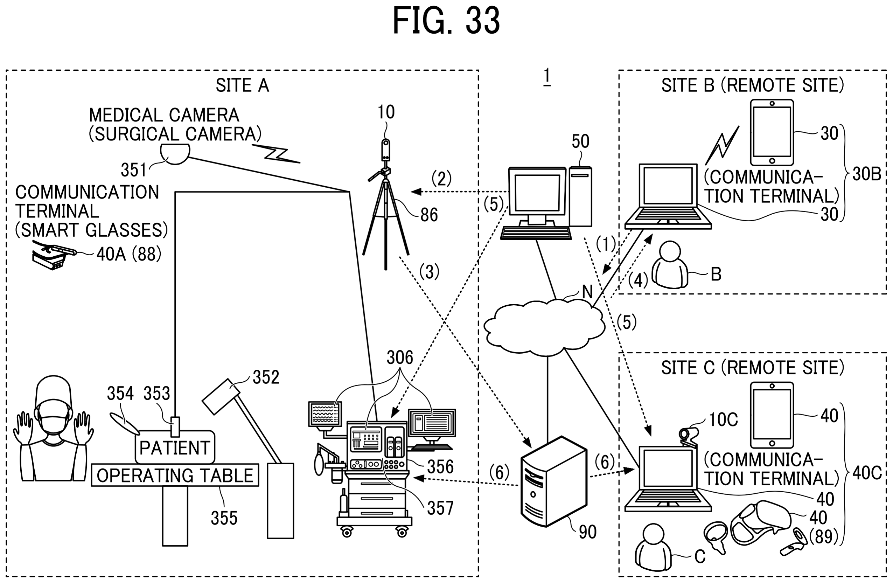

FIG. 33 is a diagram illustrating an example of remote communication using the communication system 1 in telemedicine. In the description of FIG. 33, differences from FIG. 1 will be described.

In the illustrated example, the site A is an operating room. The processing steps (1) to (6) in FIG. 33 may be similar to those in FIG. 1. A patient is placed on an operating table 355 and is subjected to surgery by a medical professional such as a surgeon. The medical professional (corresponding to the user A) operates on the patient with various surgical tools 354 such as forceps and a scalpel. The medical professional may wear the smart glasses 88 and transmit an image of the surgical field for surgery performed by the medical professional to the network N. Various cameras are placed in the operating room. Examples of the cameras include a surgical camera 351, a surgical field camera 352, and an endoscope 353. All of the cameras in the operating room and the smart glasses 88 are associated with a virtual room.

A main unit 356 is installed in the operating room. The main unit 356 monitors the vitals of a patient, the operating state of medical devices, and the like. The main unit 356 corresponds to the communication terminal 40A according to the embodiment described above. The communication terminal 40A (i.e., the main unit 356) in the operating room may have a function of receiving video from the endoscope 353 or the surgical field camera 352 in addition to the functions illustrated in FIG. 1.

In one example, the communication terminal 40A displays the received video on displays 306 and transmits the video to the information processing system 50 as the video of the site at which the communication terminal 40A is located. An operation panel 357 is an input interface that accepts various operations. In one example, a medical professional operates a device in the operating room via the operation panel 357. The endoscope 353, the surgical camera 351, and the surgical field camera 352 may communicate with the information processing system 50 directly without the intervention of the communication terminal 40A.

The communication terminal 40A has the function of an electronic medical record system and may have a function of communicating with an electronic medical record system. The communication terminal 40A may display information on an electronic medical record on the displays 306.

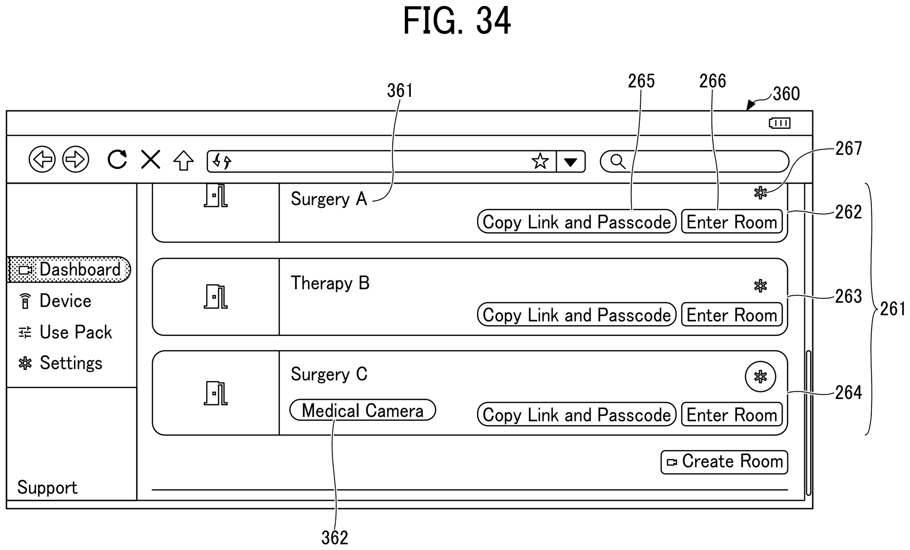

FIG. 34 is a diagram illustrating an example of a virtual room association screen 360 for associating the image capturing apparatus 10 with a virtual room in the example illustrated in FIG. 33. In the description of FIG. 34, differences from FIG. 21 will be described.

In telemedicine, in one example, the virtual room association screen 360 displays a list of virtual rooms 361 associated with remote surgery or medical therapy. One of the virtual rooms 361 is associated with a medical camera 362 including a spherical camera. Examples of the medical camera 362 include an endoscope, a surgical field camera for use in capturing a surgical field image in an operating room, and a camera that captures a microscopic image.

In the communication system 1 according to an embodiment of the present disclosure, the first communication terminal 30 that receives a wide-view image captured by the image capturing apparatus 10 via the network N receives point-of-view information for specifying a predetermined area in the wide-view image that is being displayed, and superimposes points of view on the wide-view image. The limitation unit 37 of the first communication terminal 30 limits any one of reception and display of point-of-view information, based on a connection policy including settings related to an amount of traffic.

According to an embodiment of the present disclosure, therefore, transmission and reception or display of point-of-view information can be controlled.

In the example configurations such as that illustrated in FIG. 13, the information processing system 50, the image capturing apparatus 10, the first communication terminal 30, and the second communication terminal 40 are divided according to main functions thereof to facilitate understanding of the processes performed by the information processing system 50, the image capturing apparatus 10, the first communication terminal 30, and the second communication terminal 40. No limitation on the present disclosure is intended by how the functions are divided by process or by the name of the functions. The processing of each of the information processing system 50, the image capturing apparatus 10, the first communication terminal 30, and the second communication terminal 40 may be divided into more units of processing in accordance with the content of the processing. Further, the division may be made such that each unit of processing includes more processing operations.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The apparatuses or devices described in one or more embodiments of the present disclosure are merely examples of computing environments that can implement the embodiment disclosed herein. In some embodiments, the information processing system 50 includes multiple computing devices such as a server cluster. The multiple computing devices communicate with one another through any type of communication link including the network N, shared memory, or the like and perform the processes disclosed herein.

Further, the information processing system 50 may be configured to share the processing steps disclosed herein, for example, the processing steps illustrated in FIGs. 25, 26, and so on in various combinations. For example, a process executed by a predetermined unit may be executed by multiple information processing apparatuses included in the information processing system 50. The components of the information processing system 50 may be integrated into one server apparatus or divided into multiple apparatuses.

For example, aspects of the present disclosure include the following.

In a first aspect, a communication terminal for receiving, via a network, a wide-view image captured by an image capturing apparatus includes a reception unit, a display control unit, and a limitation unit. The reception unit receives point-of-view information for specifying a predetermined area being displayed in the wide-view image on a source apparatus from which the point-of-view information is received. The display control unit causes a point of view of the source apparatus to be displayed superimposed in a predetermined area being displayed in the wide-view image on the communication terminal, based on the received point-of-view information. The limitation unit limits a number of points of view to be superimposed, based on a connection policy including a setting related to the point-of-view information.

According to a second aspect, in the communication terminal of the first aspect, the wide-view image to be displayed by the display control unit includes a predetermined number of regions, and the limitation unit limits a number of points of view to be displayed for each of the predetermined number of regions of the wide-view image.

In a third aspect, a communication terminal for receiving, via a network, a wide-view image captured by an image capturing apparatus includes a transmission unit and a limitation unit. The transmission unit transmits point-of-view information for specifying a predetermined area in the wide-view image that is being displayed. The limitation unit limits transmission of the point-of-view information, based on a connection policy including a setting related to the point-of-view information.

According to a fourth aspect, the communication terminal of the third aspect further includes a reception unit. The reception unit receives an instruction for transmitting the point-of-view information, the instruction being transmitted to a source apparatus selected based on the connection policy.

According to a fifth aspect, in the communication terminal of the fourth aspect, the instruction for transmitting the point-of-view information includes information related to a limitation on a transmission count of the point-of-view information per unit time.

According to a sixth aspect, in the communication terminal of the third aspect or the fourth aspect, the transmission unit stores the point-of-view information in a case where the transmission of the point-of-view information is limited by the limitation unit, and transmits the stored point-of-view information after an end of an event using the wide-view image.

According to a seventh aspect, in the communication terminal of any one of the third to fifth aspects, the transmission unit transmits information related to a difference from previously transmitted point-of-view information.

In an eighth aspect, a communication system includes an information processing system. The information processing system transmits a wide-view image captured by an image capturing apparatus to a first communication terminal and a plurality of second communication terminals. The communication system further includes a reception unit, a display control unit, and a limitation unit. The reception unit receives point-of-view information for specifying a predetermined area being displayed in the wide-view image on a source apparatus from which the point-of-view information is received. The display control unit causes a point of view of the source apparatus to be displayed superimposed in a predetermined area being displayed in the wide-view image on the first communication terminal, based on the received point-of-view information. The limitation unit limits a number of points of view to be superimposed, based on a connection policy including a setting related to the point-of-view information.

In a ninth aspect, a communication system includes an information processing system. The information processing system transmits a wide-view image captured by an image capturing apparatus to a first communication terminal and a plurality of second communication terminals. The communication system includes a transmission unit and a limitation unit. The transmission unit transmits point-of-view information to the first communication terminal. The limitation unit limits transmission of the point-of-view information, based on a connection policy including a setting related to the point-of-view information.

In a tenth aspect, a communication method executed by a communication terminal for receiving, via a network, a wide-view image captured by an image capturing apparatus includes receiving point-of-view information for specifying a predetermined area being displayed in the wide-view image on a source apparatus from which the point-of-view information is received; causing a point of view of the source apparatus to be displayed superimposed in a predetermined area being displayed in the wide-view image on the communication terminal, based on the received point-of-view information; and limiting a number of points of view to be superimposed, based on a connection policy including a setting related to the point-of-view information.

In an eleventh aspect, a communication method executed by a communication terminal for receiving, via a network, a wide-view image captured by an image capturing apparatus includes transmitting point-of-view information for specifying a predetermined area in the wide-view image that is being displayed; and limiting transmission of the point-of-view information, based on a connection policy including a setting related to the point-of-view information.

In a twelfth aspect, a program causes a communication terminal for receiving, via a network, a wide-view image captured by an image capturing apparatus to execute a process including receiving point-of-view information for specifying a predetermined area being displayed in the wide-view image on a source apparatus from which the point-of-view information is received; causing a point of view of the source apparatus to be displayed superimposed in a predetermined area being displayed in the wide-view image on the communication terminal, based on the received point-of-view information; and limiting a number of points of view to be superimposed, based on a connection policy including a setting related to the point-of-view information.

In a thirteenth aspect, a program causes a communication terminal for receiving, via a network, a wide-view image captured by an image capturing apparatus to execute a process including transmitting point-of-view information for specifying a predetermined area in the wide-view image that is being displayed; and limiting transmission of the point-of-view information, based on a connection policy including a setting related to the point-of-view information.

## Claims

1. A first communication terminal (30) for communicating with a second communication terminal (40), the first communication terminal (30) comprising:
a communication unit (31) configured to receive from the second communication terminal (40) point-of-view information for specifying a predetermined area being displayed in a wide-view image on the second communication terminal (40), the wide-view image being captured by an image capturing apparatus;
a display control unit (33) configured to cause a point of view of the second communication terminal (40) to be displayed, the point of view being superimposed in a predetermined area displayed in the wide-view image on the first communication terminal (30), based on the received point-of-view information; and
a limitation unit (37) configured to limit a number of points of view to be superimposed, based on a connection policy including a setting related to the point-of-view information.

2. The first communication terminal (30) according to claim 1, wherein
the wide-view image to be displayed on the first communication terminal (30) includes a predetermined number of regions, and
the limitation unit (37) is configured to limit a number of points of view to be displayed for each of the predetermined number of regions of the wide-view image.

3. A second communication terminal (40) for communicating with a first communication terminal (30), the second communication terminal (40) comprising:
a display control unit (43) configured to cause a display to display a wide-view image captured by an image capturing apparatus;
a communication unit (41) configured to transmit to the first communication terminal (30) point-of-view information for specifying a predetermined area in the wide-view image; and
a limitation unit (46) configured to limit transmission of the point-of-view information to the first communication terminal (30), based on a connection policy including a setting related to the point-of-view information.

4. The second communication terminal (40) according to claim 3, wherein the communication unit (41) is configured to receive from the first communication terminal (30) an instruction for transmitting the point-of-view information, the instruction being transmitted to the second communication terminal (40) selected based on the connection policy.

5. The second communication terminal (40) according to claim 4, wherein the instruction for transmitting the point-of-view information includes information related to a limitation on a transmission count of the point-of-view information per unit time.

6. The second communication terminal (40) according to claim 3 or 4, wherein the communication unit (41) is configured to:
store the point-of-view information in a case where the transmission of the point-of-view information is limited by the limitation unit (46); and
transmit the stored point-of-view information to the first communication terminal (30) after an end of an event using the wide-view image.

7. The second communication terminal (40) according to any one of claims 3 to 5, wherein the communication unit (41) is configured to transmit to the first communication terminal (30) information related to a difference from previously transmitted point-of-view information.

8. A communication system (1) comprising:
the first communication terminal (30) according to claim 1 or 2;
the second communication terminal (40) according to any one of claims 3 to 7, the second communication terminal (40) being one of a plurality of second communication terminals (40, 40A, 40C); and
an information processing system (50) to transmit the wide-view image captured by the image capturing apparatus to the first communication terminal (30) and the plurality of second communication terminals (40, 40A, 40C).

9. A communication method executed by a first communication terminal (30) for communicating with a second communication terminal (40), the communication method comprising:
receiving (S64; S76; S86; S113) from the second communication terminal (40) point-of-view information for specifying a predetermined area being displayed in a wide-view image on the second communication terminal (40), the wide-view image being captured by an image capturing apparatus;
causing (S64; S115) a point of view of the second communication terminal (40) to be displayed, the point of view being superimposed in a predetermined area displayed in the wide-view image on the first communication terminal (30), based on the received point-of-view information; and
limiting (S72, S73, S74, S75; S82, S83, S84, S85, S86, S87; S101) a number of points of view to be superimposed, based on a connection policy including a setting related to the point-of-view information.

10. Carrier means carrying computer readable code for controlling a computer system to carry out the method of claim 9.

11. A communication method executed by a second communication terminal (40) for communicating with a first communication terminal (30), the communication method comprising:
causing (S45, S46, S52) a display to display a wide-view image captured by an image capturing apparatus;
transmitting (S64; S76; S86; S113) to the first communication terminal (30) point-of-view information for specifying a predetermined area in the wide-view image; and
limiting (S75, S76; S87, S88, S90; S103, S104, S105) transmission of the point-of-view information to the first communication terminal (30), based on a connection policy including a setting related to the point-of-view information.

12. Carrier means carrying computer readable code for controlling a computer system to carry out the method of claim 11.
